# EUROPEAN PATENT APPLICATION

(11) **EP 2 680 105 A2**
(43) Date of publication of application: **01.01.2014**
(21) Application number: 13163913.0
(22) Date of filing: 16.04.2013
(51) Int. Cl.: G06F 1/32, H04L 12/00

(54) **Control apparatus, control method, and control program**

(30) Priority: 29.06.2012 JP 2012147206
(71) Applicant: FUJITSU LIMITED, Kawasaki-shi, Kanagawa 211-8588 (JP)
(72) Inventor: Oikawa, Toshihiko, Kanagawa, 211-8588 (JP)
(74) Representative: HOFFMANN EITLE

(57) **Abstract**

A control apparatus includes an acquiring unit that acquires from a first computer that executes a software application, type information indicating a use of the software application, which uses a memory apparatus; an identifying unit that identifies an electric power saving scheme that corresponds to the acquired type information, by referring to control information that correlates type information of each software application and any one of multiple electric power saving schemes whose electric power saving efficiencies for the memory apparatus differ from each other; and a transmitting unit that transmits to a second computer capable of controlling operation of the memory apparatus according to each of the electric power saving schemes, a request to cause the memory apparatus to operate according to the identified electric power saving scheme.

## Description

### FIELD

The embodiments discussed herein are related to a control apparatus, a control method, and a control program.

### BACKGROUND

According to a conventional technique for a storage apparatus, control of electric power saving is executed for a magnetic disk apparatus in the storage apparatus after establishing matching between an instruction for the electric power saving from a manager and the operation state of the magnetic disk apparatus (see, e.g., Japanese Laid-Open Patent Publication No. 2008-243177). According to another technique, voltage supplied to a semiconductor memory apparatus (a silicon disk apparatus) through a supply voltage switching circuit is switched between a low voltage power supply and a high voltage power supply corresponding to the electric power saving mode designated by a higher-order system (see, e.g., Japanese Laid-Open Patent Publication No. 2000-132283).

However, when a hard disk drive (HDD) of a storage apparatus is accessed from a server that executes an application, the frequency of the access of the HDD and the permissible response speed may differ depending on the type of application. As above, an electric power saving mode set in the HDD may not be suitable for the permissible response speed of the application.

For example, when an electric power saving mode is set in an HDD in a storage apparatus and an application in a server requires a high speed response of the HDD, the speed of the response of the HDD becomes low due to the electric power saving and therefore, operation of the application is obstructed. On the other hand, when the application in the server requires no high speed response of the HDD, power consumption is suppressed and therefore, preferably, an electric power saving mode is set whose electric power saving efficiency is relatively high among plural electric power saving modes. However, in a case where the application in the server requires no high speed response of the HDD, when an electric power saving mode is set whose electric power saving efficiency is relatively low among the plural electric power saving modes, the electric power is wastefully consumed compared to that consumed in an electric power saving mode whose electric power saving efficiency is high.

To solve this problem, when a manager sets an electric power saving mode of the storage apparatus for the mode to be suitable for the type of the application, the manager has to manually set the electric power saving mode of the HDD after knowing the type of the application that uses the HDD. Therefore, the work load placed on the manager for preventing the decrease of the response speed of the HDD and the management of the electric power saving to improve the electric power saving efficiency of the HDD increases.

### SUMMARY

It is an object in one aspect of the embodiments to at least solve the above problems in the conventional technologies.

According to an aspect of an embodiment, a control apparatus includes an acquiring unit that acquires from a first computer that executes a software application, type information indicating a use of the software application, which uses a memory apparatus; an identifying unit that identifies an electric power saving scheme that corresponds to the acquired type information, by referring to control information that correlates type information of each software application and any one of multiple electric power saving schemes whose electric power saving efficiencies for the memory apparatus differ from each other; and a transmitting unit that transmits to a second computer capable of controlling operation of the memory apparatus according to each of the electric power saving schemes, a request to cause the memory apparatus to operate according to the identified electric power saving scheme.

### BRIEF DESCRIPTION OF DRAWINGS

FIG. 1 is an explanatory diagram depicting a flow for determining an electric power saving mode executed by a managing server;
FIG. 2 is an explanatory diagram of an example of a storage system;
FIG. 3 is a block diagram of a hardware configuration of a management server 110 according to the embodiment;
FIG. 4 is an explanatory diagram of an example of electric power saving modes that can be set in a RAID group in a storage apparatus 130;
FIG. 5 is an explanatory diagram of an example of the contents of a RAID group management table;
FIG. 6 is an explanatory diagram of an example of the contents of an electric power saving mode determination table;
FIG. 7 is an explanatory diagram of an example of the contents of an electric power saving mode management table;
FIG. 8 is an explanatory diagram of an example of the contents of a server/storage management table;
FIG. 9 is a block diagram of a functional configuration of the managing server 110;
FIGs. 10 and 11 are explanatory diagrams of the content of an electric power saving mode determination process executed by the managing server 110;
FIGs. 12, 13, and 14 are sequence diagrams depicting details of a process procedure of the electric power saving mode determination process executed by the managing server 110;
FIG. 15 is an explanatory diagram of the content of an electric power saving mode setting process executed by the managing server 110;
FIGs. 16 and 17 are sequence diagrams depicting details of a process procedure of the electric power saving mode setting process executed by the managing server 110;
FIG. 18 is an explanatory diagram of the content of an electric power saving mode determination table change process executed by the managing server 110;
FIG. 19 is a sequence diagram depicting details of a process procedure of the electric power saving mode determination table change process executed by the managing server 110 depicted in FIG. 18;
FIGs. 20, 21, 22, and 23 are explanatory diagrams of the content of the electric power saving mode change process executed by the managing server 110;
FIGs. 24, 25, 26, and 27 are sequence diagrams depicting details of a process procedure for the electric power saving mode change process executed by the managing server 110; and
FIG. 28 is an explanatory diagram of an example of the contents of an electric power saving mode determination table 600.

### DESCRIPTION OF EMBODIMENTS

An embodiment of a control apparatus, a control method, and a control program according to the present invention will be described in detail with reference to the accompanying drawings. The embodiment will be described below assuming that, for example, a managing server has a function of a control apparatus.

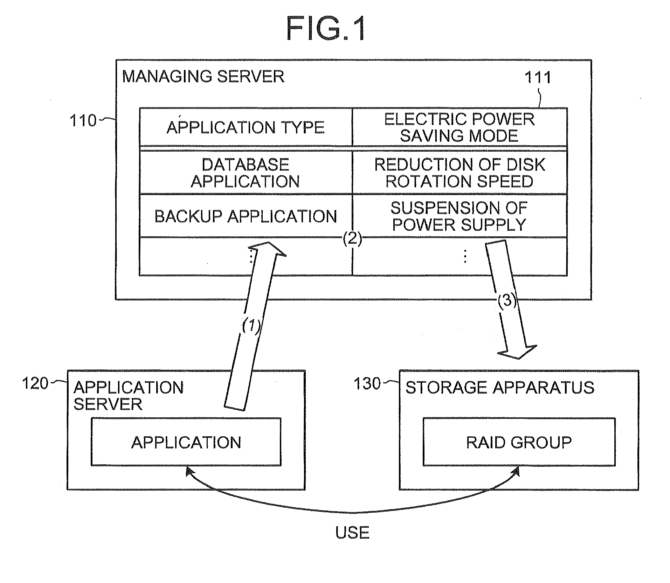

FIG. 1 is an explanatory diagram depicting a flow for determining an electric power saving mode executed by the managing server. In FIG. 1, the managing server 110 is connected to an application server 120 and a storage apparatus 130.

The managing server 110 is a computer that according to the type of application that uses a group of redundant arrays of independent disks (RAID group) in a storage apparatus 130, determines the electric power saving mode to be set for the RAID group. The managing server 110 transmits to the storage apparatus 130, a setting request to cause the determined electric power saving mode to be set in the RAID group. The managing server 110 includes a table 111 that is used to determine the electric power saving mode. The table 111 has information that is formed by correlating application types and electric power saving modes.

Application types include, for example, "database application" and "backup application". A process executed by the "database application" is, for example, a process of writing data into a database and is a process of which the user of the application requires a high speed response. On the other hand, a process executed by the "backup application" is, for example, a process of writing data into the RAID group and is a process of which the user of the application requires no high speed response.

The electric power saving modes include, for example, a "mode to reduce the speed of the disk rotation of an HDD included in the RAID group" and a "mode to suspend the power supply to the RAID group". In the "mode to reduce the speed of the disk rotation of an HDD included in the RAID group", electric power saving is facilitated by reducing the speed of the disk rotation; thereafter, the disk rotation is returned to its normal operation state, whereby a response to the application is enabled. On the other hand, in the "mode to suspend the power supply to the RAID group", electric power saving is facilitated by suspending the power supply; thereafter, the power supply is restarted, whereby the disk rotation is returned to its normal operation state and a response to the application is enabled. Therefore, the "mode to suspend the power supply to the RAID group" is a mode that provides low speed responses while having an electric power saving efficiency that is high compared to the "mode to reduce the speed of the disk rotation of an HDD included in the RAID group".

Thus, in the table 111, the "backup application" of which no high speed response is required is correlated with the "mode to suspend the power supply to the RAID group" which impedes the speed of the response while having a high electric power saving efficiency; and the "database application" of which high speed responses are required is correlated with the "mode to reduce the speed of the disk rotation of an HDD included in the RAID group" whose electric power saving efficiency is low. The managing server 110 refers to the table 111 and thereby, can determine according to application type, an electric power saving mode to reduce power consumption while suppressing decreases in the performance of an application.

The application server 120 is a computer executing an application that uses the RAID group in the storage apparatus 130.

The storage apparatus 130 is a computer having one or more RAID group(s). The storage apparatus 130 sets the electric power saving mode that is requested by the managing server 110 in the RAID group. The RAID group includes one or more HDD(s).

In the example of FIG. 1, (1) the managing server 110 acquires from the application server 120, the application type "backup application" of the application that uses the RAID group whose operation is to be controlled; and (2) the managing server 110 refers to the table 111 and thereby, identifies the electric power saving mode "power supply suspension" of the RAID group that corresponds to the application type "backup application" of the acquired application.

(3) The managing server 110 transmits to the storage apparatus 130, a setting request to set the identified electric power saving mode "power supply suspension" in the RAID group. The storage apparatus 130 receives the setting request and suspends the power supply to the RAID group.

Thus, the managing server 110 can identify the electric power saving mode that corresponds to the application type of the application. The managing server 110 can cause the storage apparatus 130 to set the identified electric power saving mode in the RAID group. Therefore, the managing server 110 can reduce the work load necessary for the management of the electric power saving of the RAID group by the user of the managing server 110 and can realize proper electric power saving of the RAID group. The storage apparatus 130 can set the electric power saving mode transmitted from the managing server 110 in the RAID group and can reduce the power consumption of the RAID group.

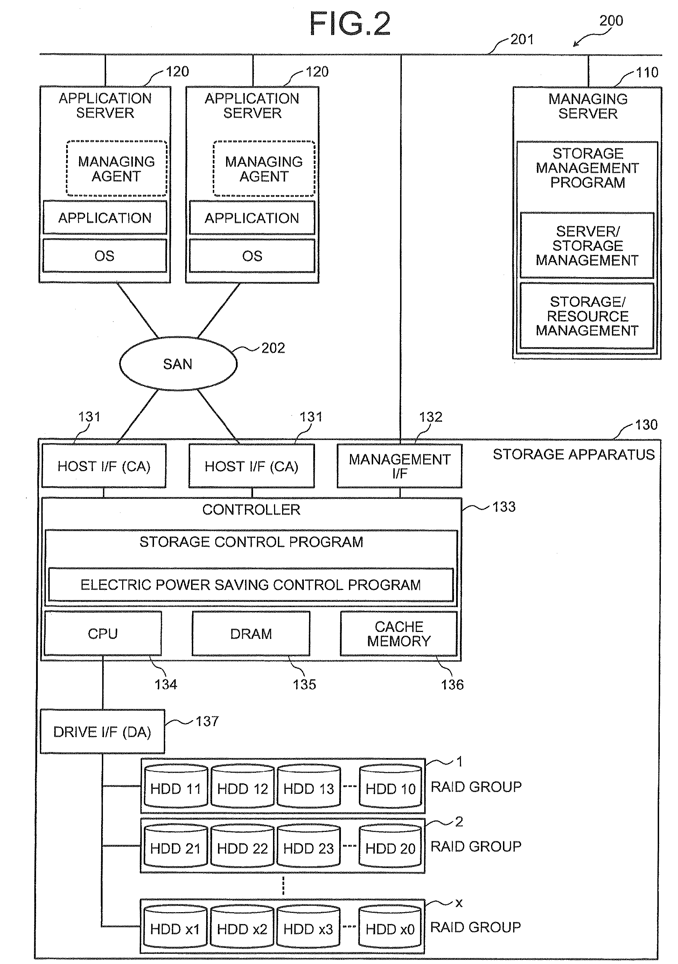

FIG. 2 is an explanatory diagram of an example of a storage system. In FIG. 2, a storage system 200 includes the managing server 110, two application servers 120, and the storage apparatus 130. The managing server 110, the two application servers 120, and the storage apparatus 130 are connected to each other by a local area network (LAN) 201. The two application servers 120 and the storage apparatus 130 are connected to each other by a storage area network (SAN) 202.

The managing server 110 includes a storage management program. The storage management program is a program that determines the electric power saving mode to be set in the RAID group in the storage apparatus 130. The storage management program includes a server/storage management program and a server storage management program.

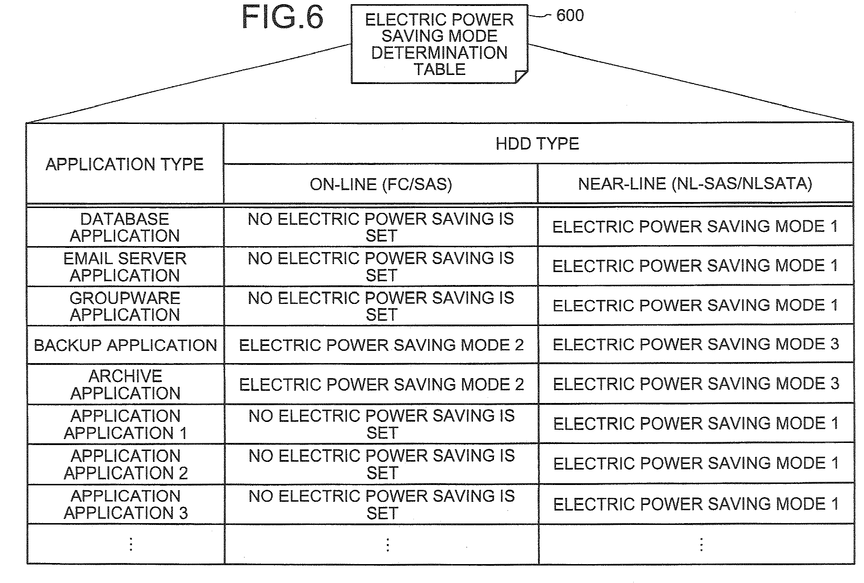

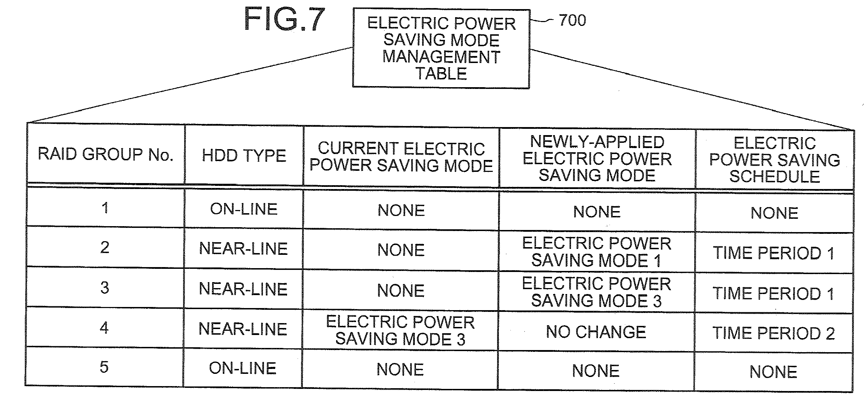

The server/storage management program is a program to communicate with the storage apparatus 130. The managing server 110 includes an electric power saving mode determination table and an electric power saving mode management table that are used by the server/storage management program. Details of the contents of the electric power saving mode determination table will be described later with reference to FIG. 6. Details of the contents of the electric power saving mode management table will be described later with reference to FIG. 7.

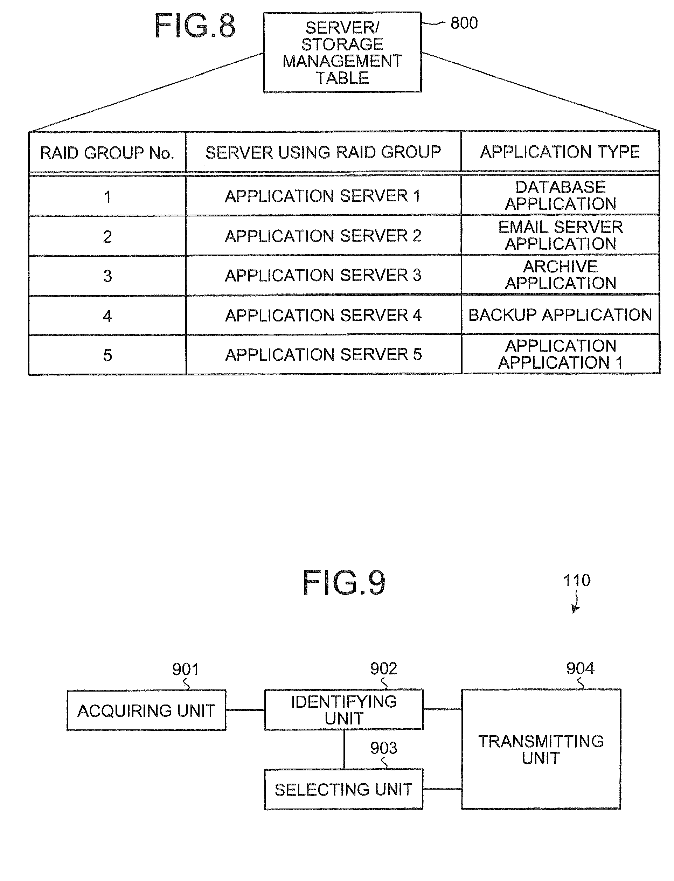

The server storage management program is a program to communicate with the application server 120. The managing server 110 includes a server/storage management table that is used by the server storage management program. Details of the contents of the server/storage management table will be described later with reference to FIG. 8.

The managing server 110 acquires the application type of the application that uses the RAID group whose operation is to be controlled. The managing server 110 acquires the HDD type of the HDD included in the RAID group whose operation is to be controlled.

The application server 120 includes applications, a managing agent, and an OS that use the RAID group in the storage apparatus 130. Using the managing agent, the application server 120 transmits to the managing server 110, the application type of the application and the RAID group No. of the RAID group used by the application.

The storage apparatus 130 includes a management I/F 132, a host I/F 131, a controller 133, a drive I/F 137, and RAID groups 1 to x. The RAID groups 1 to x each include plural HDDs.

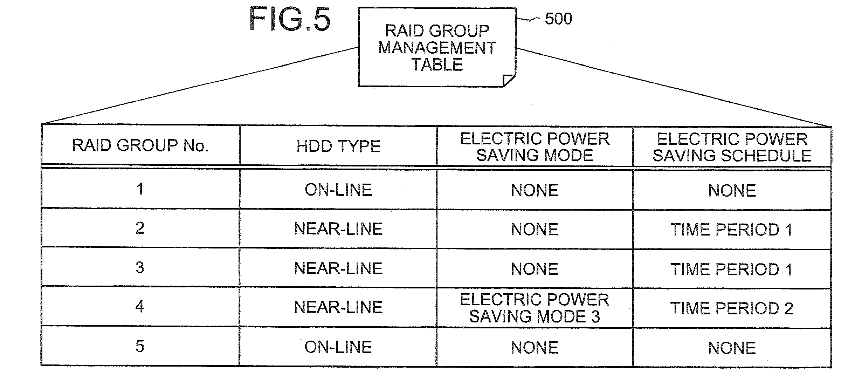

The controller 133 includes a storage control program, a CPU 134, a DRAM 135, and a cache memory 136. The storage control program includes an electric power saving control program that sets an electric power saving mode in the RAID group in the storage apparatus 130. The storage apparatus 130 includes a RAID group management table that is used by the electric power saving control program. Details of the contents of the RAID group management table will be described later with reference to FIG. 5.

Although the number of application servers 120 is two in the description above, the number is not limited hereto. For example, one application server 120 or plural application servers 120 of three or more may be employed. Although the number of applications executed by the application server 120 is one, the number is not limited hereto. For example, plural applications may be executed by the application server 120.

Although the managing server 110, the application server 120, and the storage apparatus 130 are computers each different from each other in the description above, configuration is not limited hereto. For example, the managing server 110 may be a computer that also operates as the application server 120. Further, the managing server 110 may be a computer that also operates as the storage apparatus 130.

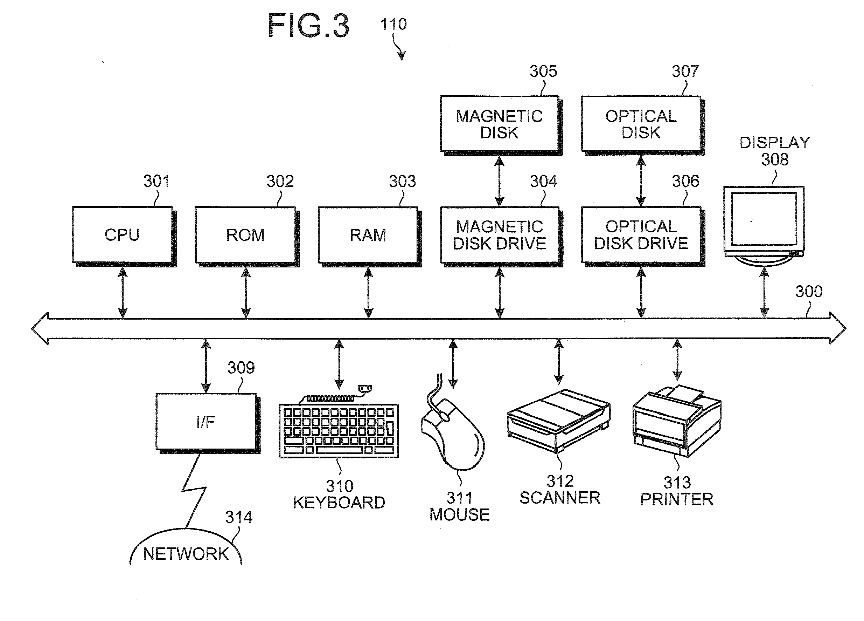

An example of a hardware configuration of the managing server 110 according to the embodiment will be described with reference to FIG. 3. The hardware configuration depicted in FIG. 3 can be employed also as the hardware configuration of the application server 120.

FIG. 3 is a block diagram of a hardware configuration of a management server 110 according to the embodiment. As depicted in FIG. 3, the management server 110 includes a central processing unit (CPU) 301, a read-only memory (ROM) 302, a random access memory (roam) 303, a magnetic disk drive 304 (HDD), a magnetic disk 305, an optical disk drive 306, an optical disk 307, a display 308, an interface (I/F) 309, a keyboard 310, a mouse 311, a scanner 312, and a printer 313, respectively connected by a bus 300.

The CPU 301 governs overall control of the management server 110. The ROM 302 stores therein programs such as a boot program and a storage management program. The RAM 303 is used as a work area of the CPU 301. The magnetic disk drive 304, under the control of the CPU 301, controls the reading and writing of data with respect to the magnetic disk 305. The magnetic disk 305 stores therein data written under control of the magnetic disk drive 304.

The optical disk drive 306, under the control of the CPU 301, controls the reading and writing of data with respect to the optical disk 307. The optical disk 307 stores therein data written under control of the optical disk drive 306, the data being read by a computer.

The display 308 displays, for example, data such as text, images, functional information, etc., in addition to a cursor, icons, and/or tool boxes. A liquid crystal display, a plasma display, etc. may be employed as the display 308.

The I/F 309 is connected to a network 314 such as the LAN 201, the SAN 202, a wide area network (WAN), and the Internet through a communication line and is connected to other apparatuses through the network 314. The I/F 309 administers an internal interface with the network 314 and controls the input/output of data from/to external apparatuses. For example, a modem or a LAN adaptor may be employed as the I/F 309.

The keyboard 310 includes, for example, keys for inputting letters, numerals, and various instructions and performs the input of data. Alternatively, a touch-panel-type input pad or numeric keypad, etc. may be adopted. The mouse 311 is used to move the cursor, select a region, or move and change the size of windows. A track ball or a joy stick may be adopted provided each respectively has a function similar to a pointing device.

The scanner 312 optically reads an image and takes in the image data into the management server 110. The scanner 312 may have an optical character reader (OCR) function as well. The printer 313 prints image data and text data. The printer 313 may be, for example, a laser printer or an ink jet printer. Among the optical disk drive 306, the optical disk 307, the display 308, the keyboard 310, the mouse 311, the scanner 312, and the printer 313, any one or more may be omitted.

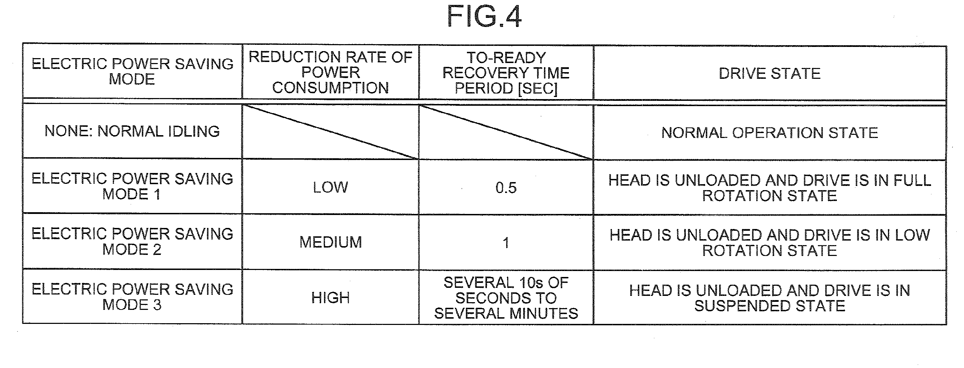

FIG. 4 is an explanatory diagram of an example of electric power saving modes that can be set in the RAID group in the storage apparatus 130. The explanatory diagram depicted in FIG. 4 includes a power consumption reduction rate column, a to-Ready recovery time period column, and a drive state column respectively correlated with an electric power saving mode column and configuring records for each electric power saving mode.

The electric power saving column indicates the names of the electric power saving modes. The power consumption reduction rate column indicates the rate of reduction of the power consumption to the power consumption in the normal operation state. The to-Ready recovery time period column indicates time periods for the HDD to reach a normal operation state (for the head to be in a loaded state and for the disk rotation to be in a full rotation state) in an electric power saving mode. "Ready" refers to a state where the HDD is in a normal operation state and can respond to the application that uses the HDD. The drive state column indicates the position of the head and the number of drive rotations in the electric power saving mode.

For example, in an "electric power saving mode 1", the state of the HDD can be returned to the normal operation state when the state of the head of the HDD is changed to the loaded state and therefore, the recovery time period to "Ready" is "0.5 seconds" which is shorter than that of the other electric power saving modes. However, in the "electric power saving mode 1", the speed of the disk rotation is not reduced and therefore, the power consumption reduction rate is lower than that of the other electric power saving modes and is "low".

On the other hand, in an "electric power saving mode 3", the state of the HDD can not be returned to the normal state if the power supply to the HDD is not restarted and the state of the head of the HDD is not changed to the loaded state and therefore, the recovery time period to "Ready" is "several 10s of seconds to several minutes" which is longer than that of the other electric power saving modes. However, in the "electric power saving mode 3", the power supply to the HDD is suspended and therefore, the power consumption reduction rate is higher than that of the other electric power saving modes and is "high".

An example of the contents of the RAID group management table will be described with reference to FIG. 5. The RAID group management table is a table having information that indicates the state of the RAID group. The RAID group management table is realized by, for example, the DRAM 135 depicted in FIG. 2.

FIG. 5 is an explanatory diagram of an example of the contents of the RAID group management table. As depicted in FIG. 5, the RAID group management table 500 includes an HDD type column, an electric power saving mode column, and an electric power saving schedule column respectively correlated with a RAID group No. column and configuring records for each RAID group.

The RAID group No. column indicates Nos. that are allocated to the RAID groups. The Nos. allocated to the RAID groups are each a unique No. in the storage apparatus 130. The HDD type column indicates the HDD type of the HDDs included in the RAID group to which the No. indicated by the RAID group No. column is allocated. The HDD type refers to the type of the HDD.

HDD types include, for example, "on-line drive (hereinafter, simply referred to as "on-line")" and "near-line drive (hereinafter, simply referred to as "near-line")". "On-line" refers to a type of HDD that is manufactured for, for example, a use whose access frequency is high. "Near-line" refers to a type of HDD that is manufactured for, for example, a use whose access frequency is low. The HDD type is, for example, input into the storage apparatus 130 by the user of the storage apparatus 130 or automatically recognized by the electric power saving control program of the storage apparatus 130; and retained in the RAID group management table 500.

The electric power saving mode column indicates the name of the electric power saving mode currently set in the RAID group to which the No. indicated by the RAID group No. column is allocated. The name of the electric power saving mode is, for example, any one of the names depicted in FIG. 4. The electric power saving schedule column indicates the time period during which the electric power saving mode is set. The time period is, for example, input into the storage apparatus 130 by the user of the storage apparatus 130 and retained in the RAID group management table 500.

An example of the contents of the electric power saving mode determination table will be described with reference to FIG. 6. The electric power saving mode determination table is a table having information that is used to determine the electric power saving mode to be set in the RAID group, and is realized by, for example, the RAM 303 depicted in FIG. 3.

FIG. 6 is an explanatory diagram of an example of the contents of the electric power saving mode determination table. In FIG. 6, the electric power saving mode determination table 600 includes an on-line column and a near-line column respectively correlated with a application type column and configuring records for each of the application types.

The application type column indicates the application type. An application type is the type of the application. Types of applications include, for example, a database application, a mail server application, or a groupware application, whose response speed is required to be high. Types of applications also include, for example, a backup application or an archive application, whose response speed is not required to be high. Types of application also include, for example, a business application produced by a user of the application server 120.

The on-line column indicates the electric power saving mode that is set in an on-line HDD when the type of application indicated by the application type column is allocated to the on-line HDD. The on-line column indicates, for example, "no electric power saving is set" which indicates that no electric power saving mode is set in the on-line HDD when a database application whose response speed is required to be high is allocated to the on-line HDD.

The near-line column indicates the electric power saving mode that is set in a near-line HDD when the type of application indicated by the application type column is allocated to the near-line HDD. The near-line column indicates, for example, the "electric power saving mode 1" which is the name of the electric power saving mode to be set in the near-line HDD when a database application whose response speed is required to be high is allocated to the near-line HDD.

The table 111 depicted in FIG. 1 corresponds to the electric power saving mode determination table 600 acquired when the electric power saving mode corresponding to the application type is correlated with the HDD regardless of whether the HDD type is "on-line" or "near-line".

An example of the contents of the electric power saving mode management table will be described with reference to FIG. 7. The electric power saving mode management table is a table that has the electric power saving modes to be set in the RAID groups and is realized by, for example, the RAM 303 depicted in FIG. 3.

FIG. 7 is an explanatory diagram of an example of the contents of the electric power saving mode management table. In FIG. 7, the electric power saving mode management table 700 includes an HDD type column, a current electric power saving mode column, a newly applied electric power saving mode column, and an electric power saving schedule column respectively correlated with a RAID group No. column and configuring records for each RAID group.

The RAID group No. column indicates the Nos. that are allocated to the RAID groups. The Nos. allocated to the RAID groups are each a unique No. in the storage apparatus 130.

The HDD type column indicates the type of HDD that is included in the RAID group to which the No. indicated by the RAID group No. column is allocated. HDD types include, for example, the "on-line" and the "near-line".

The current electric power saving mode column indicates the name of the electric power saving mode that currently is set in the RAID group to which the No. indicated by the RAID group No. column is allocated. The name of the electric power saving mode is any one of the names depicted in FIG. 4.

The newly applied electric power saving mode column indicates the name of the electric power saving mode that is newly set in the RAID group to which the No. indicated by the RAID group No. column is allocated. The name of the electric power saving mode is, for example, any one of the names depicted in FIG. 4. The electric power saving schedule column indicates the time period during which the electric power saving mode is set.

An example of the contents of the server/storage management table will be described with reference to FIG. 8. The server/storage management table is a table of the application types that are acquired from the application server 120.

FIG. 8 is an explanatory diagram of an example of the contents of the server/storage management table. In FIG. 8, the server/storage management table 800 includes a RAID group using server column and an application type column respectively correlated with a RAID group No. column and configuring records for each RAID group.

The RAID group No. indicates the No. allocated to the RAID group. The Nos. allocated to the RAID groups each are a unique No. in the storage apparatus 130.

The RAID group using server column indicates the name of the application server 120 that uses the RAID group to which the No. indicated by the RAID group No. column is allocated. The application type column indicates the application type of the application that uses the RAID group to which the No. indicated by the RAID group No. column is allocated.

FIG. 9 is a block diagram of a functional configuration of the managing server 110. The managing server 110 includes an acquiring unit 901, an identifying unit 902, a selecting unit 903, and a transmitting unit 904. Functions of the units from the acquiring unit 901 to the transmitting unit 904 are implemented, for example, by executing on the CPU 301, programs stored in a memory apparatus such as the ROM 302, the RAM 303, the magnetic disk 305, and the optical disk 307 depicted in FIG. 3, or by using the I/F 309.

The managing server 110 has a function of determining the electric power saving mode from the application type. The managing server 110 may have a function of determining the electric power saving mode from a combination of the application type and the HDD type.

The function of determining the electric power saving mode from the application type will first be described. The function of determining the electric power saving mode from the application type is realized by the units from the acquiring unit 901 to the transmitting unit 904. A specific example of this function is, for example, the example depicted in FIG. 1.

The acquiring unit 901 acquires type information indicating the use of software, from a first computer executing the software that uses the memory apparatus. The memory apparatus is an apparatus into which the software writes data and from which the software reads data and is, for example, the RAID group. The memory apparatus may be one HDD. The software is, for example, the database application or the backup application. The first computer is, for example, the application server 120. The type information indicating the use of the software is, for example, the application type.

For example, the acquiring unit 901 acquires, from the application server 120 executing an application that uses the RAID group to be controlled, the application type of the application. For example, the acquiring unit 901 acquires information indicating whether a file constituting the application is present in a specific folder in the application server 120, through the managing agent of the application server 120 and thereby, identifies the application type.

For example, when plural applications are present that use the RAID group to be controlled, the acquiring unit 901 may acquire the application type of each of the applications from the application server 120 that executes each of the applications.

Thereby, the identifying unit 902 can refer to the application type acquired by the acquiring unit 901 and identify the electric power saving mode to be set in the RAID group to be controlled. The acquired application type is stored to a memory area such as in the RAM 303, the magnetic disk 305, and the optical disk 307.

The identifying unit 902 refers to control information formed by correlating the type information of each software with any one of the plural electric power saving schemes whose electric power saving efficiencies for the memory apparatus differ from each other; and thereby, identifies the electric power saving scheme that corresponds to the type information of the software acquired by the acquiring unit 901.

The electric power saving scheme is, for example, the electric power saving mode. The electric power saving efficiency is, for example, the rate of the power consumption by the operation of the RAID group in the electric power saving mode to the power consumption in the normal operation thereof. The control information is, for example, the table 111 depicted in FIG. 1 or the electric power saving mode determination table 600 depicted in FIG. 6.

For example, the identifying unit 902 refers to the electric power saving mode determination table 600 and identifies the electric power saving mode that corresponds to the application type acquired by the acquiring unit 901. Thereby, the transmitting unit 904 can transmit to the storage apparatus 130, the setting request for the electric power saving mode identified by the identifying unit 902. The identified electric power saving mode is stored to a memory area such as in the RAM 303, the magnetic disk 305, and the optical disk 307.

An example will be taken where the acquiring unit 901 acquires one application type and the identifying unit 902 identifies one electric power saving mode. In this case, the transmitting unit 904 transmits to a second computer that can control the operation of the memory apparatus under each of the electric power saving schemes, a request to cause the memory apparatus to operate in the electric power saving scheme identified by the identifying unit 902. The second computer is, for example, the storage apparatus 130.

For example, the transmitting unit 904 transmits to the storage apparatus 130, a request to set the electric power saving mode identified by the identifying unit 902 in the RAID group to be controlled. Thereby, the managing server 110 can reduce the work load placed on the user of the managing server 110 for the management of the electric power saving of the RAID group and can realize proper electric power saving of the RAID group. The storage apparatus 130 can reduce the power consumption of the RAID group while suppressing drops in the performance of the application that uses the RAID group.

An example will be taken where the acquiring unit 901 acquires plural application types and the identifying unit 902 identifies plural electric power saving modes. In this case, the selecting unit 903 selects the electric power saving scheme whose electric power saving efficiency is the lowest among the identified electric power saving schemes. The electric power saving scheme whose electric power saving efficiency is the lowest is an electric power saving mode whose impedance of the speed of the response to the application is low. Thus, the transmitting unit 904 can transmit to the storage apparatus 130, a setting request for the electric power saving mode selected by the selecting unit 903. The selected electric power saving mode is stored to a memory area such as in the RAM 303, the magnetic disk 305, and the optical disk 307.

The transmitting unit 904 transmits to the second computer, a request to cause the memory apparatus to operate in the electric power saving scheme selected by the selecting unit 903. For example, the transmitting unit 904 transmits to the storage apparatus 130, a request to set in the RAID group to be controlled, the electric power saving mode that is selected by the selecting unit 903 and whose electric power saving efficiency is the lowest. Thus, the managing server 110 can reduce the work load placed on the user of the managing server 110 for the setting of the electric power saving mode, and can improve the work efficiency of the electric power saving management by the user of the managing server 110. The storage apparatus 130 can reduce the power consumption of the RAID group while suppressing drops in the performance of the application that uses the RAID group.

In this case, the selecting unit 903 may select the electric power saving scheme whose electric power saving efficiency is the highest, among the identified electric power saving schemes, whereby the transmitting unit 904 can transmit to the storage apparatus 130, a setting request for the electric power saving mode selected by the selecting unit 903. The selected electric power saving mode is stored to a memory area such as in the RAM 303, the magnetic disk 305, and the optical disk 307.

The transmitting unit 904 transmits to the second computer, a request to cause the memory apparatus to operate in the electric power saving scheme selected by the selecting unit 903. For example, the transmitting unit 904 transmits to the storage apparatus 130, a request to set in the RAID group to be controlled, the electric power saving mode that is selected by the selecting unit 903 and whose electric power saving efficiency is the highest. Thus, the managing server 110 can reduce the work load placed on the user of the managing server 110 for the setting of the electric power saving mode, and can improve the work efficiency of the electric power saving management by the user of the managing server 110. The storage apparatus 130 can reduce the power consumption of the RAID group.

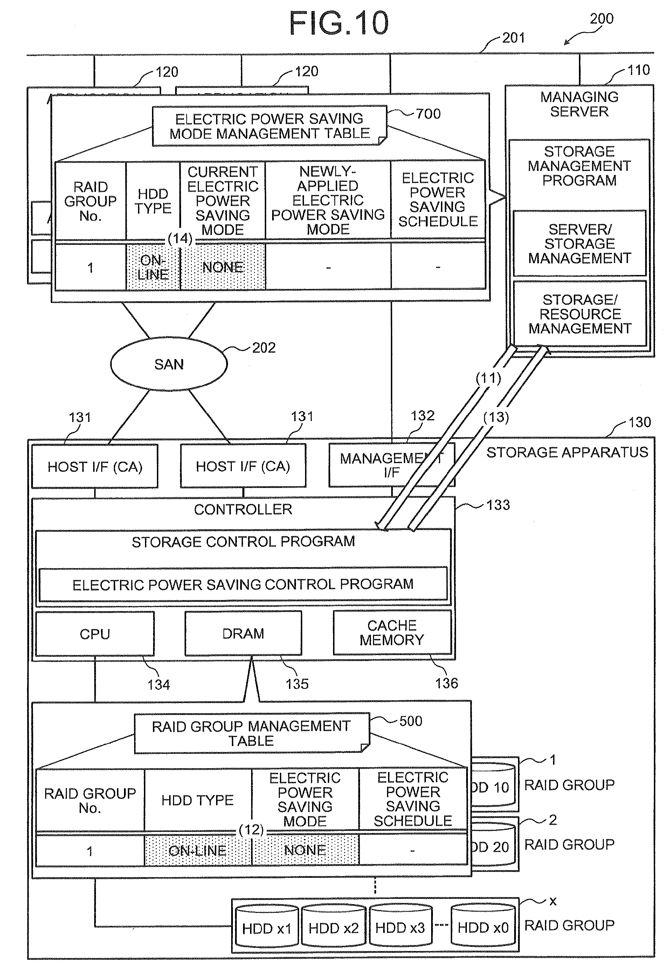

The function will be described of determining the electric power saving mode from the combination of the application type and the HDD type. The function of determining the electric power saving mode from the combination of the application type and the HDD type is realized by the acquiring unit 901, the identifying unit 902, the selecting unit 903, and the transmitting unit 904. A specific example of this function is, for example, an example described later with reference to FIGs. 10 to 28.

The acquiring unit 901 acquires from the second computer, type information that indicates the degree of the permissible access frequency of the memory apparatus. The type information indicating the degree of the access frequency refers to, for example, the HDD type. The HDD type is, for example, "on-line" or "near-line". The acquiring unit 901 acquires the type information indicating the use of the software, from the first computer executing the software that uses the memory apparatus.

For example, the acquiring unit 901 acquires from the storage apparatus 130 that includes the RAID group to be controlled, the HDD type of the HDD included in the RAID group to be controlled. For example, the acquiring unit 901 acquires from the application server 120 executing the application that uses the RAID group to be controlled, the application type of the application.

For example, when plural applications are present that use the RAID group to be controlled, the acquiring unit 901 may acquire the application type of each of the applications from the application server 120 that executes the applications.

Thus, the identifying unit 902 can refer to the HDD type and the application type acquired by the acquiring unit 901 and can identify the electric power saving mode to be set in the RAID group to be controlled. The HDD type and the application type acquired are stored to a memory area such as in the RAM 303, the magnetic disk 305, and the optical disk 307.

The identifying unit 902 refers to the information correlating the type information of each memory apparatus with the control information, and identifies the electric power saving scheme that corresponds to the combination of the type information of the software and the type information of the memory apparatus. The information formed by correlating the type information of each memory apparatus with the control information is, for example, the electric power saving mode determination table 600 depicted in FIG. 6.

For example, the identifying unit 902 refers to the electric power saving mode determination table 600 and identifies the electric power saving mode that corresponds to the combination of the HDD type and the application type acquired by the acquiring unit 901. Thereby, the transmitting unit 904 can transmit to the storage apparatus 130, a setting request for the electric power saving mode identified by the identifying unit 902. The identified electric power saving mode is stored to a memory area such as in the RAM 303, the magnetic disk 305, and the optical disk 307.

The processes executed by the selecting unit 903 and the transmitting unit 904 are same as those executed by the selecting unit 903 and the transmitting unit 904 executed when the electric power saving mode is determined from the application type and will not again be described.

A first example will be described with reference to FIGs. 10 to 27. The first example is an example for the case where one application uses the RAID group. The first example is an example for the function of determining the electric power saving mode from the combination of the application type and the HDD type described with reference to FIG. 9 and is the example for a case where one application uses the RAID group to be controlled.

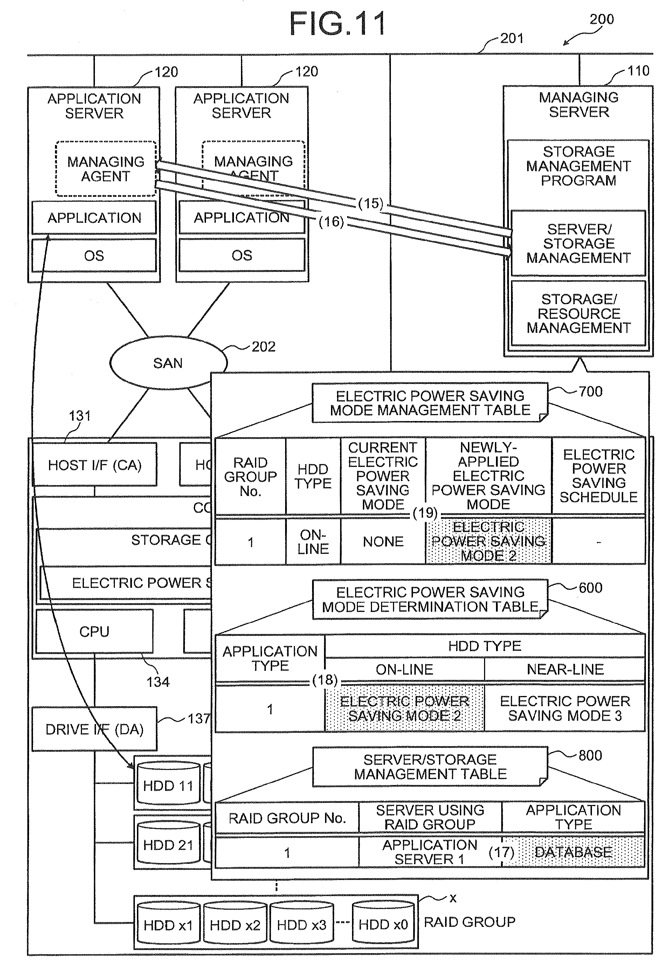

The content of an electric power saving mode determination process executed by the managing server 110 will be described with reference to FIGs. 10 and 11. The electric power saving mode determination process is a process realized by, for example, the acquiring unit 901, the identifying unit 902, and the selecting unit 903 depicted in FIG. 9.

FIGs. 10 and 11 are explanatory diagrams of the content of the electric power saving mode determination process executed by the managing server 110. As depicted in FIG. 10, the managing server 110 receives from the user of the managing server 110, input of a trigger for the electric power saving mode determination process. (11) The managing server 110 transmits to the storage apparatus 130, an acquisition request for the HDD type of the RAID group 1.

(12) The storage apparatus 130 receives the acquisition request for the HDD type of the RAID group 1, refers to the RAID group management table 500, and acquires the HDD type of the RAID group 1 and the electric power saving mode. (13) The storage apparatus 130 transmits to the managing server 110, the acquired HDD type of the RAID group 1 and the acquired electric power saving mode.

(14) The managing server 110 receives from the storage apparatus 130, the HDD type of the RAID group 1 and the electric power saving mode, and sets the received HDD type of the RAID group 1 and the received electric power saving mode into the electric power saving mode management table 700. The processing progresses to that in FIG. 11.

As depicted in FIG. 11, (15) the managing server 110 transmits an acquisition request for the application type of the RAID group 1 to the application server 120.

(16) The application server 120 receives the acquisition request of the application type of the RAID group 1, acquires the application type of the currently executed application, and transmits the application type to the managing server 110.

(17) The managing server 110 receives the application type of the RAID group 1 from the application server 120 and sets the acquired application type into the server/storage management table 800.

(18) The managing server 110 acquires the HDD type of the RAID group 1 in the electric power saving mode management table 700 and the application type of the RAID group 1 of the server/storage management table 800, refers to the electric power saving mode determination table 600, and identifies the electric power saving mode that corresponds to the HDD type of the RAID group 1 and the application type.

(19) The managing server 110 sets the identified electric power saving mode into the electric power saving mode management table 700. The managing server 110 executes the same process for each of the RAID groups 2 to x.

Thus, the managing server 110 can identify the electric power saving mode that does not impede the response speed, for the RAID group that corresponds to the combination of the HDD type and the application type whose response speeds are required to be high. The managing server 110 can identify the electric power saving mode whose electric power saving efficiency is high for the RAID group that corresponds to the combination of the HDD type and the application type whose response speeds are not required to be high.

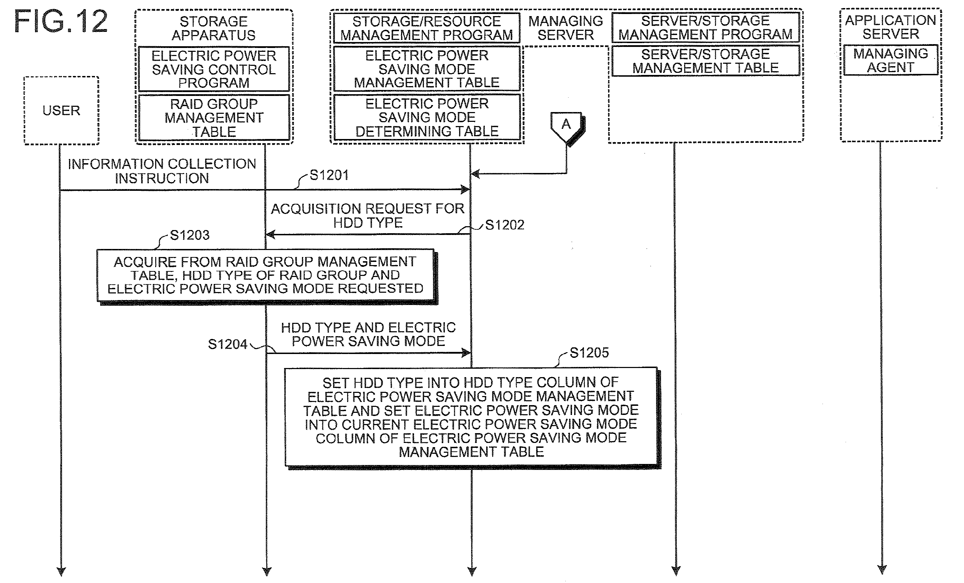

Details of a process procedure will be described for the electric power saving mode determination process executed by the managing server 110 depicted in FIGs. 10 and 11 with reference to FIGs. 12 to 14.

FIGs. 12, 13, and 14 are sequence diagrams depicting details of a process procedure of the electric power saving mode determination process executed by the managing server 110. As depicted in FIG. 12, by the server/storage management program, the managing server 110 receives from the user of the managing server 110, an information collection instruction for the RAID group of the storage apparatus 130 (step S1201).

By the server/storage management program, the managing server 110 transmits to the storage apparatus 130, an acquisition request for the HDD type of the RAID group that is not processed (step S1202).

By the electric power saving control program, the storage apparatus 130 receives the acquisition request from the managing server 110, acquires from the RAID group management table 500, the HDD type of the RAID group and the electric power saving mode that are requested (step S1203), and transmits to the managing server 110, the acquired HDD type and the acquired electric power saving mode (step S1204).

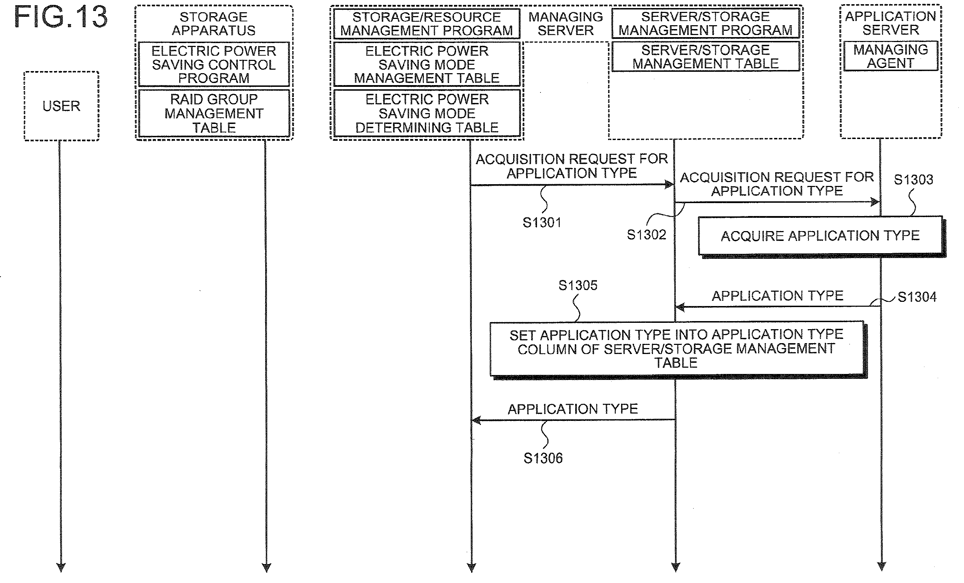

By the server/storage management program, the managing server 110 receives the HDD type of the RAID group and the electric power saving mode from the storage apparatus 130, sets the received HDD type into the HDD type column of the electric power saving mode management table 700, and sets the received electric power saving mode into the current electric power saving mode column of the electric power saving mode management table 700 (step S1205). The processing progresses to that of FIG. 13.

As depicted in FIG. 13, by the server/storage management program, the managing server 110 transmits to the server storage management program, an acquisition request for the application type of the application that uses the RAID group (step S1301).

By the server storage management program, the managing server 110 receives the acquisition request and transmits to the application server 120, an acquisition request for the application type of the application that uses the RAID group (step S1302).

Using the managing agent, the application server 120 receives the acquisition request, acquires the application type of the application that uses the RAID group (step S1303), and transmits to the managing server 110, the acquired application type (step S1304).

By the server storage management program, the managing server 110 receives the application type and sets the received application type into the application type column of the server/storage management table 800 (step S1305).

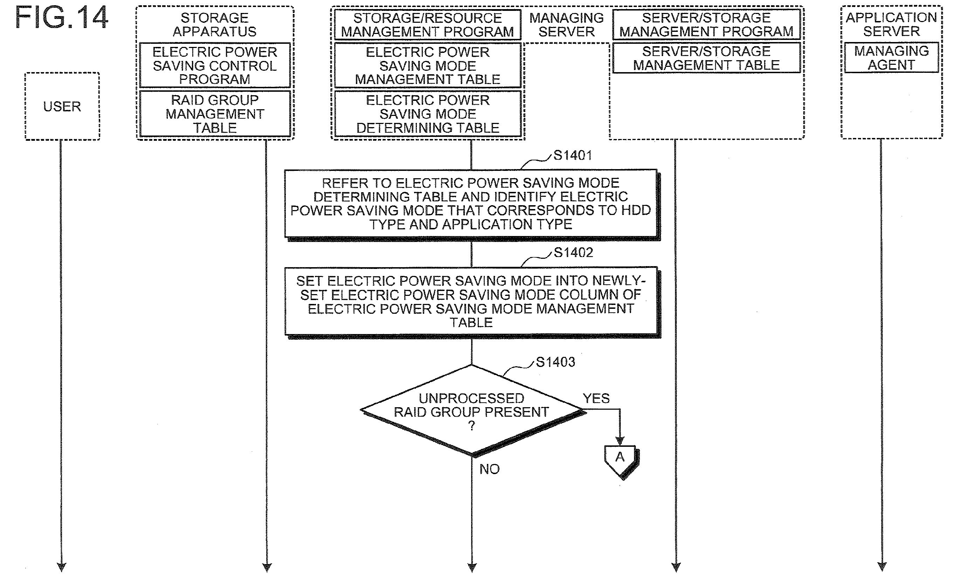

By the server storage management program, the managing server 110 transmits to the server/storage management program, the application type set into the server/storage management table 800 (step S1306). The processing progresses to that of FIG. 14.

As depicted in FIG. 14, by the server/storage management program, the managing server 110 receives the application type, acquires the HDD type from the HDD type column of the electric power saving mode management table 700, refers to the electric power saving mode determination table 600, and identifies the electric power saving mode that corresponds to the acquired HDD type and the received application type (step S1401).

By the server/storage management program, the managing server 110 sets the identified electric power saving mode into the newly-set electric power saving mode column in the electric power saving mode management table 700 (step S1402).

By the server/storage management program, the managing server 110 determines whether an unprocessed RAID group is present (step S1403). If the managing server 110 determines that no unprocessed RAID group is present (step S1403: NO), the managing server 110 causes the electric power saving mode determination process to come to an end.

On the other hand, if the managing server 110 determines that an unprocessed RAID group is present (step S1403: YES), by the server/storage management program, the managing server 110 causes the processing to return to step S1202 of FIG. 12. Thereby, the managing server 110 can identify the electric power saving mode that does not impede the response speed for the RAID group that corresponds to the combination of the HDD type and the application type whose response speeds are required to be high. The managing server 110 can identify the electric power saving mode whose electric power saving efficiency is high for the RAID group that corresponds to the combination of the HDD type and the application type whose response speeds are not required to be high.

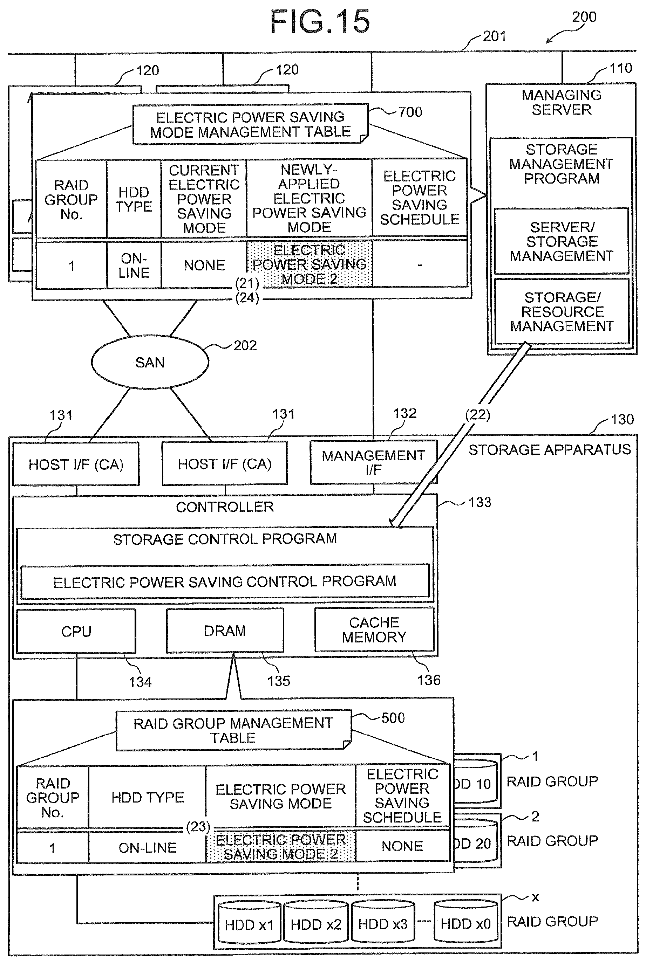

The content of an electric power saving mode setting process executed by the managing server 110 will be described with reference to FIG. 15. The electric power saving mode setting process is a process realized by, for example, the transmitting unit 904 depicted in FIG. 9.

FIG. 15 is an explanatory diagram of the content of the electric power saving mode setting process executed by the managing server 110. As depicted in FIG. 15, the managing server 110 receives from the user of the managing server 110, input of the trigger for the electric power saving mode setting process.

(21) The managing server 110 identifies from the electric power saving mode management table 700, the electric power saving mode of the RAID group 1.

(22) The managing server 110 transmits to the storage apparatus 130, a setting request for the identified electric power saving mode.

(23) The storage apparatus 130 receives the electric power saving mode, sets the RAID group 1 to be in the received electric power saving mode, and sets into the RAID group management table 500, the electric power saving mode set for the RAID group 1.

(24) The managing server 110 sets into the electric power saving mode management table 700, the electric power saving mode set in the RAID group 1. The managing server 110 executes the same process for each of the RAID groups 2 to x.

Thus, the managing server 110 can cause the storage apparatus 130 to set for the RAID group that corresponds to the combination of the HDD type and the application type whose response speeds are required to be high, an electric power saving mode that does not impede the response speed. The managing server 110 can cause the storage apparatus 130 to set for the RAID group that corresponds to the combination of the HDD type and the application type whose response speeds are not required to be high, an electric power saving mode whose electric power saving efficiency is high.

Therefore, the managing server 110 can reduce the work load necessary placed on the user of the managing server 110 for the setting of the electric power saving mode and can improve the work efficiency of the electric power saving management by the user of the managing server 110. The storage apparatus 130 can reduce the power consumption of the RAID group by setting the electric power saving mode in the RAID group.

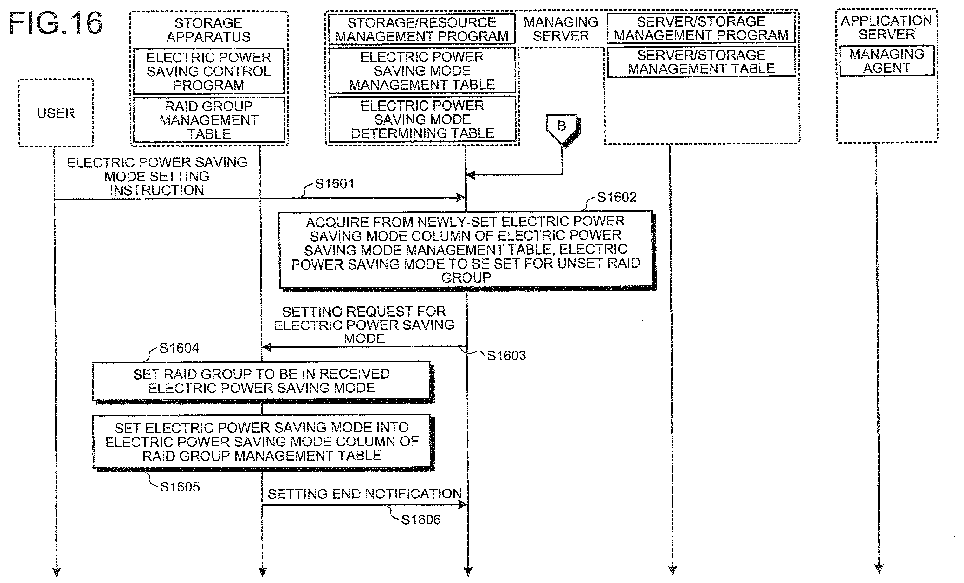

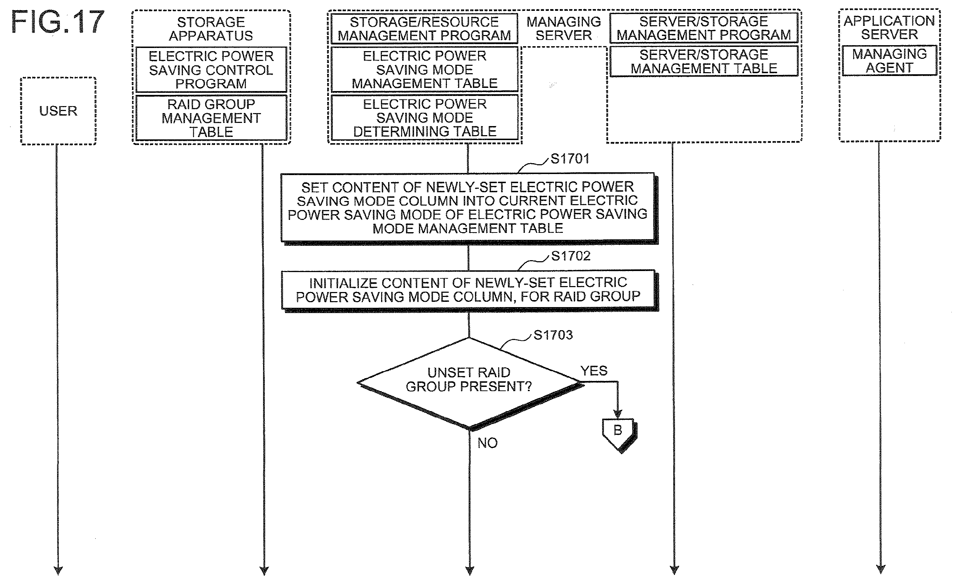

FIGs. 16 and 17 are sequence diagrams depicting details of a process procedure of the electric power saving mode setting process executed by the managing server 110. As depicted in FIG. 16, by the server/storage management program, the management server 110 receives from the user of the managing server 110, an electric power saving mode setting instruction for the RAID group of the storage apparatus 130 (step S1601).

By the server/storage management program, the managing server 110 acquires from the newly-set electric power saving mode column in the electric power saving mode management table 700, the electric power saving mode to be set in the unset RAID group (step S1602).

By the server/storage management program, the management server 110 transmits to the storage apparatus 130, a setting request for the acquired electric power saving mode (step S1603).

By the electric power saving control program, the storage apparatus 130 receives the electric power saving mode, sets the RAID group to be in the received electric power saving mode (step S1604), and sets the electric power saving mode into the electric power saving mode column of the RAID group management table 500 (step S1605).

The storage apparatus 130 transmits a setting end notification to the managing server 110 (step S1606). The processing progresses to the operations depicted in FIG. 17.

As depicted in FIG. 17, with respect to the RAID group and by the server/storage management program, the managing server 110 sets the content of the newly-set electric power saving mode column into the current electric power saving mode column of the electric power saving mode management table 700 (step S1701) and initializes for the RAID group, the content of the newly-set electric power saving mode column (step S1702).

By the server/storage management program, the managing server 110 determines whether an unset RAID group is present (step S1703). If the managing server 110 determines that no unset RAID group is present (step S1703: NO), the managing server 110 causes the electric power saving mode setting process to come to an end. On the other hand, if the managing server 110 determines that an unset RAID group is present (step S1703: YES), the managing server 110 causes the processing to return to step S1602.

Thus, the managing server 110 can cause the storage apparatus 130 to set for the RAID group that corresponds to the combination of the HDD type and the application type whose response speeds are required to be high, an electric power saving mode that does not impede the response speed. The managing server 110 can also cause the storage apparatus 130 to set for the RAID group that corresponds to the combination of the HDD type and the application type whose response speeds are not required to be high, an electric power saving mode whose electric power saving efficiency is high.

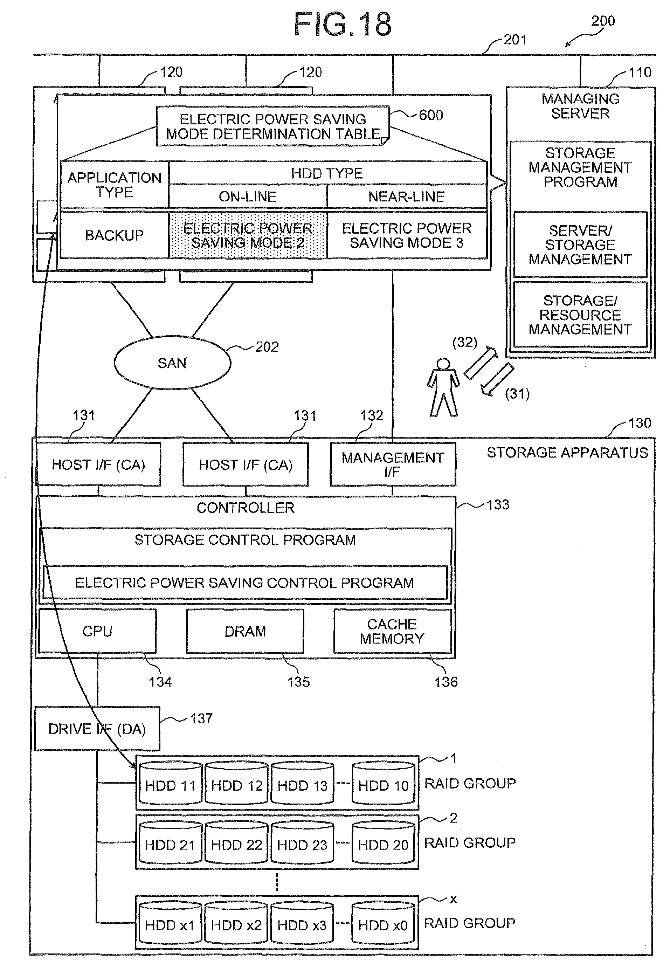

The content of an electric power saving mode determination table change process executed by the managing server 110 will be described with reference to FIG. 18. The managing server 110 can receive input from the user of the managing server 110 and thereby, can change the contents of the electric power saving mode determination table 600.

FIG. 18 is an explanatory diagram of the content of the electric power saving mode determination table change process executed by the managing server 110. As depicted in FIG. 18, the managing server 110 receives from the user of the managing server 110, input of a trigger for the electric power saving mode determination table change process.

(31) The managing server 110 outputs the electric power saving mode determination table 600 to a display and thereby, notifies the user of the managing server 110 of the electric power saving mode determination table 600.

(32) The managing server 110 receives input for the electric power saving mode determination table 600 and updates the electric power saving mode determination table 600. Thereby, the managing server 110 can change the contents of the electric power saving mode determination table 600.

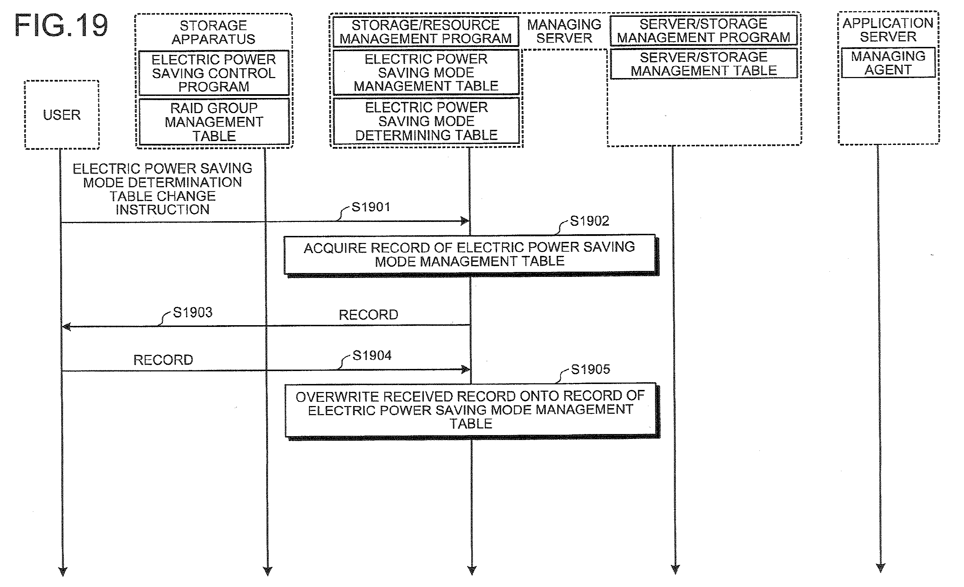

FIG. 19 is a sequence diagram depicting details of a process procedure of the electric power saving mode determination table change process executed by the managing server 110 depicted in FIG. 18. As depicted in FIG. 19, according to the server/storage management program, the managing server 110 receives from the user of the managing server 110, an electric power saving mode determination table change instruction (step S1901).

By the server/storage management program, the managing server 110 acquires the record of the electric power saving mode management table 700 (step S1902) and outputs the acquired record (step S1903).

By the server/storage management program, the managing server 110 receives the record and overwrites the received record on the record of the electric power saving mode management table 700 (step S1905). Thereby, the managing server 110 can change the contents of the electric power saving mode determination table 600.

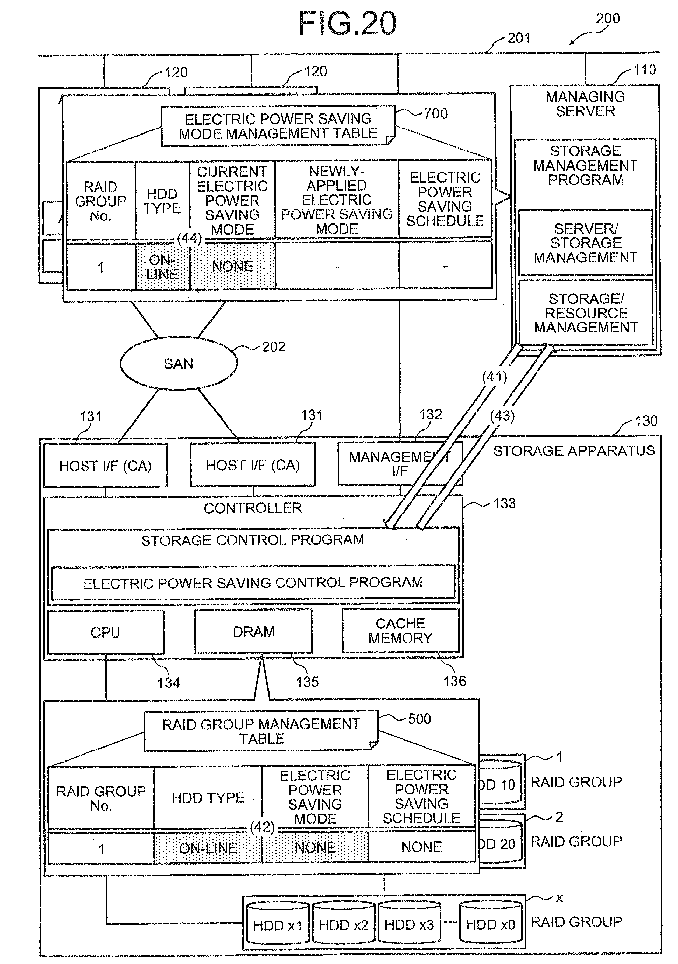

The content of the electric power saving mode change process executed by the managing server 110 will be described with reference to FIGs. 20 to 23. The electric power saving mode change process is a process that is realized by, for example, the acquiring unit 901, the identifying unit 902, and the transmitting unit 904 depicted in FIG. 9. The managing server 110, in response to input from the user of the managing server 110, can cause the storage apparatus 130 to change the electric power saving mode set in the RAID group.

FIGs. 20, 21, 22, and 23 are explanatory diagrams of the content of the electric power saving mode change process executed by the managing server 110. As depicted in FIG. 20, the managing server 110 receives from the user of the managing server 110, input of a trigger for the electric power saving mode change process. (41) The managing server 110 transmits to the storage apparatus 130, an acquisition request for the HDD type of the RAID group 1.

(42) The storage apparatus 130 receives the acquisition request for the HDD type of the RAID group 1, refers to the RAID group management table 500, and acquires the HDD type of the RAID group 1 and the electric power saving mode. (43) The storage apparatus 130 transmits to the managing server 110, the acquired HDD type of the RAID group 1 and the acquired electric power saving mode.

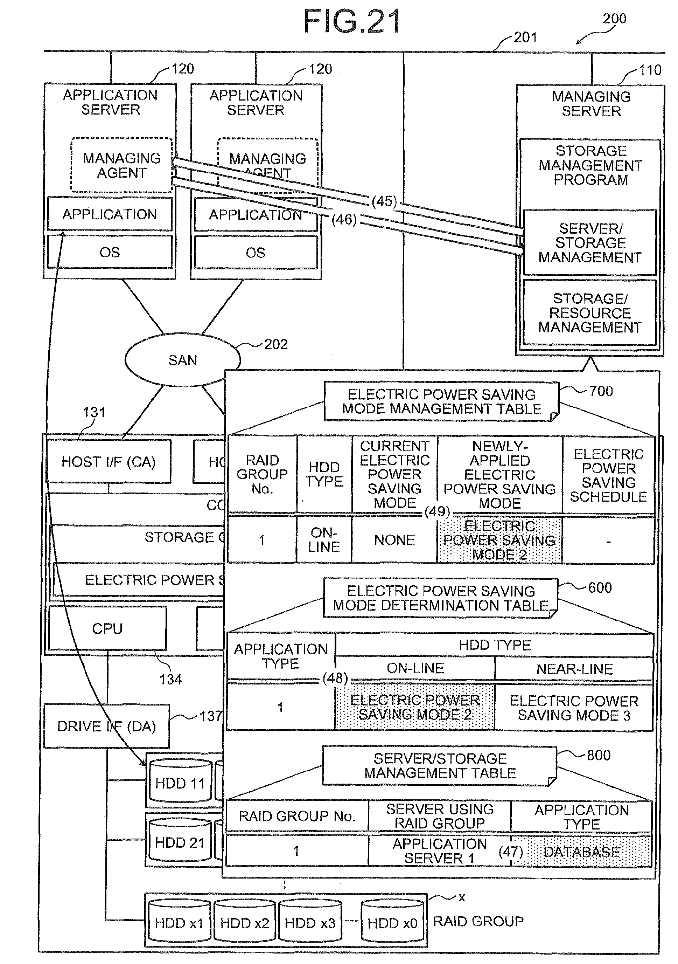

(44) The managing server 110 receives from the storage apparatus 130, the HDD type of the RAID group 1 and the electric power saving mode and sets into the electric power saving mode management table 700, the received HDD type of the RAID group 1 and the received electric power saving mode. The processing progresses to the operations depicted in FIG. 21.

As depicted in FIG. 21, (45) the managing server 110 transmits to the application server 120, an acquisition request for the application type of the RAID group 1.

(46) The application server 120 receives the acquisition request for the application type of the RAID group 1, acquires the application type of the currently executed application, and transmits the application type to the managing server 110.

(47) The managing server 110 receives from the application server 120, the application type of the RAID group 1 and sets the acquired application type into the server/storage management table 800.

(48) The managing server 110 acquires the HDD type of the RAID group 1 indicated in the electric power saving mode management table 700 and the application type of the RAID group 1 indicated in the server/storage management table 800, refers to the electric power saving mode determination table 600, and identifies the electric power saving mode that corresponds to the acquired HDD type of the RAID group 1 and the acquired application type.

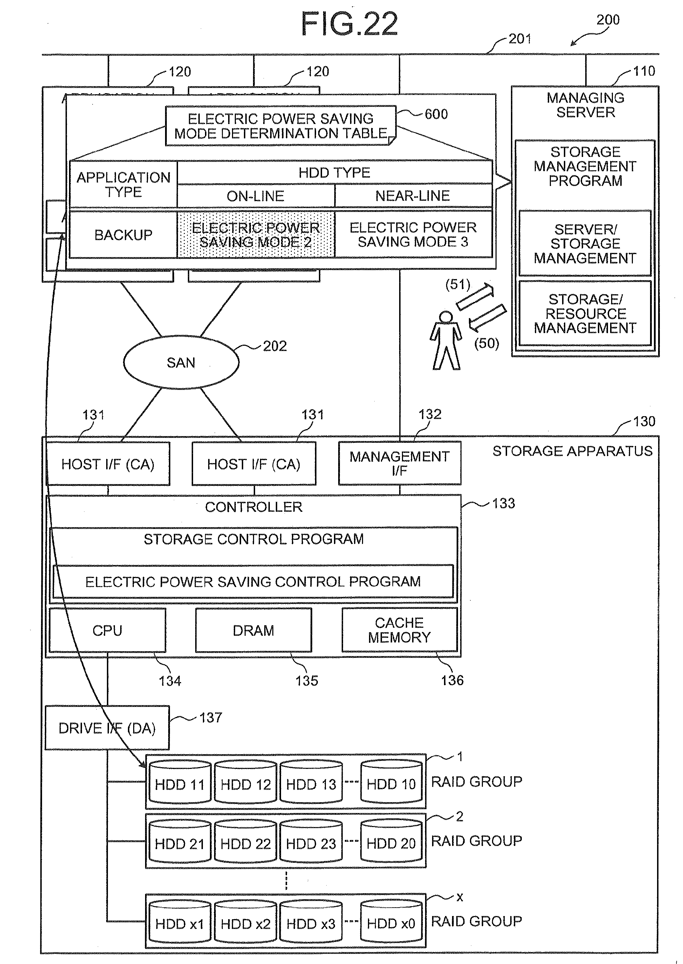

(49) The managing server 110 sets the identified electric power saving mode into the electric power saving mode management table 700. The processing progresses to the operations depicted in FIG. 22.

As depicted in FIG. 22, (50) the managing server 110 outputs the electric power saving mode determination table 600 to the display and thereby, notifies the user of the managing server 110, of the electric power saving mode determination table 600.

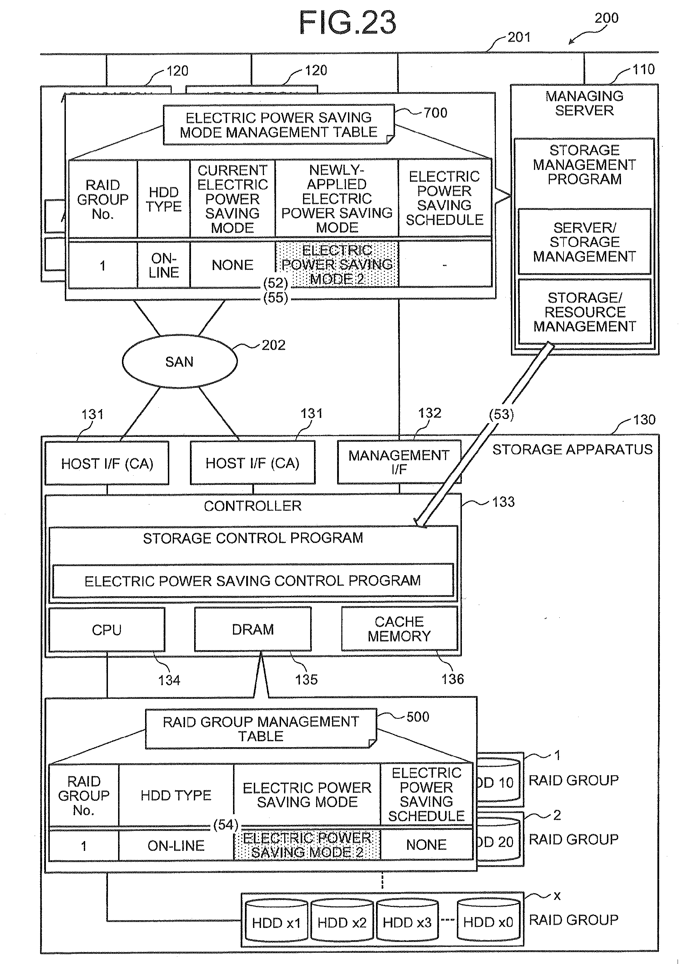

(51) The managing server 110 receives input for the electric power saving mode determination table 600 and updates the electric power saving mode determination table 600. The processing progresses to the operations depicted in FIG. 23.

As depicted in FIG. 23, (52) the managing server 110 identifies from the electric power saving mode management table 700, the electric power saving mode for the RAID group 1.

(53) The managing server 110 transmits to the storage apparatus 130, a setting request for the identified electric power saving mode.

(54) The storage apparatus 130 receives the electric power saving mode, sets the RAID group 1 to be in the received electric power saving mode, and sets into the RAID group management table 500, the electric power saving mode set in the RAID group 1.

(55) The management server 110 sets into in the electric power saving mode management table 700, the electric power saving mode set in the RAID group 1. Thus, the managing server 110 can cause the storage apparatus 130 to set for the RAID group, the electric power saving mode input from the user of the managing server 110. The storage apparatus 130 can reduce the power consumption of the RAID group by setting the electric power saving mode in the RAID group.

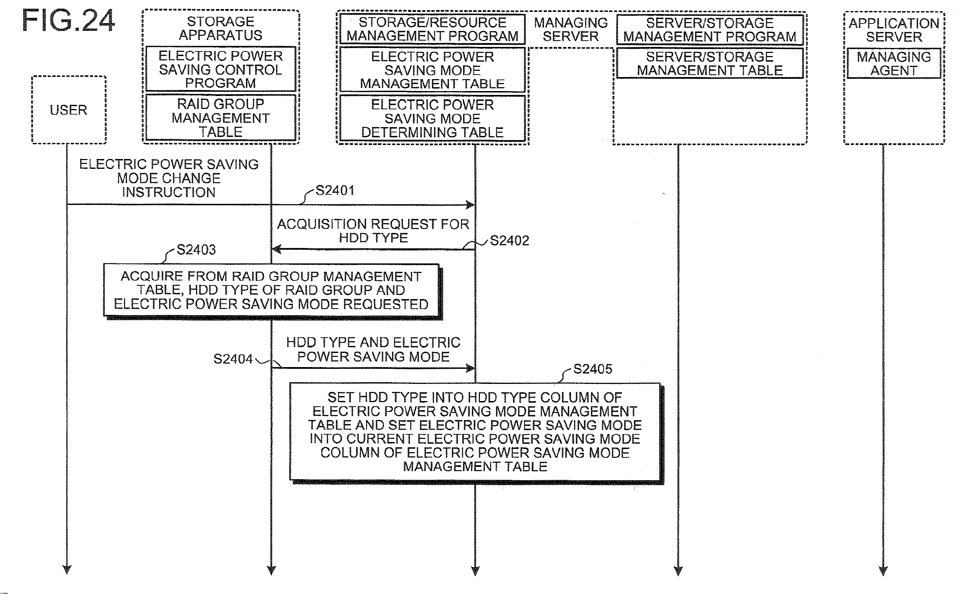

Details of a process procedure of the electric power saving mode change process executed by the managing server 110 depicted in FIGs. 20 to 23 will be described with reference to FIGs. 24 to 27.

FIGs. 24, 25, 26, and 27 are sequence diagrams depicting details of a process procedure for the electric power saving mode change process executed by the managing server 110. As depicted in FIG. 24, by the server/storage management program, the managing server 110 receives an electric power saving mode change instruction from the user of the managing server 110 (step S2401).

By the server/storage management program, the managing server 110 transmits to the storage apparatus 130, an acquisition request for the HDD type of the RAID group (step S2402).

By the electric power saving control program, the storage apparatus 130 receives the acquisition request from the managing server 110, acquires from the RAID group management table 500, the HDD type of the RAID group and the electric power saving mode that are request (step S2403), and transmits the acquired HDD type and the acquired electric power saving mode to the managing server 110 (step S2404).

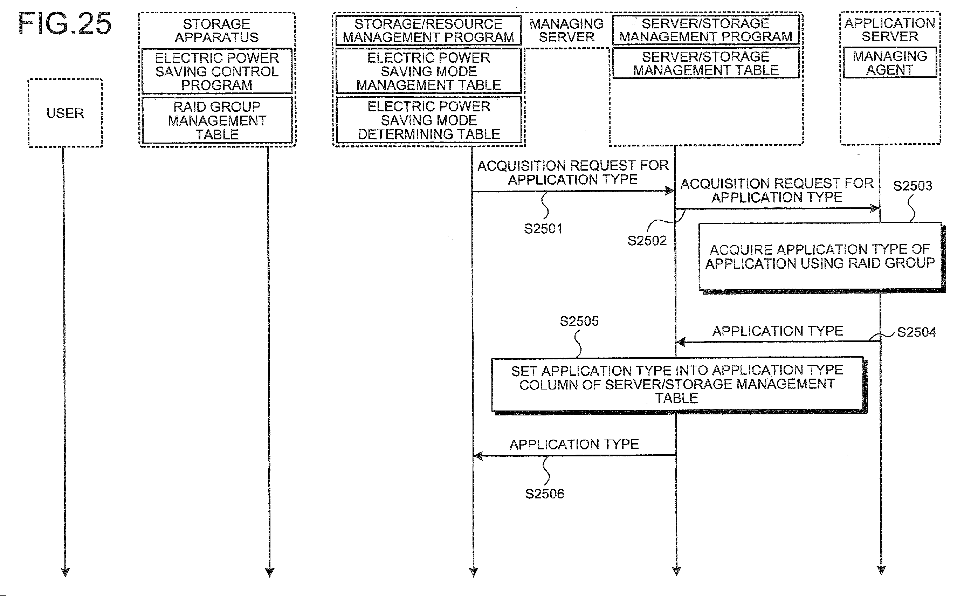

By the server/storage management program, the managing server 110 receives from the storage apparatus 130, the HDD type of the RAID group and the electric power saving mode, sets the received HDD type into the HDD type column of the electric power saving mode management table 700, and sets the received electric power saving mode into the current electric power saving mode column of the electric power saving mode management table 700 (step S2405). The processing progresses to the operations depicted in FIG. 25.

As depicted in FIG. 25, by the server/storage management program, the managing server 110 transmits to the server storage management program, an acquisition request for the application type of the application that uses the RAID group (step S2501).

By the server storage management program, the managing server 110 receives the acquisition request and transmits to the application server 120, an acquisition request for the application type of the application that uses the RAID group (step S2502).

Using the managing agent, the application server 120 receives the acquisition request, acquires the application type of the application that uses the RAID group (step S2503), and transmits the acquired application type to the management server 110 (step S2504).

By the server storage management program, the managing server 110 receives the application type and sets the received application type into the application type column of the server/storage management table 800 (step S2505).

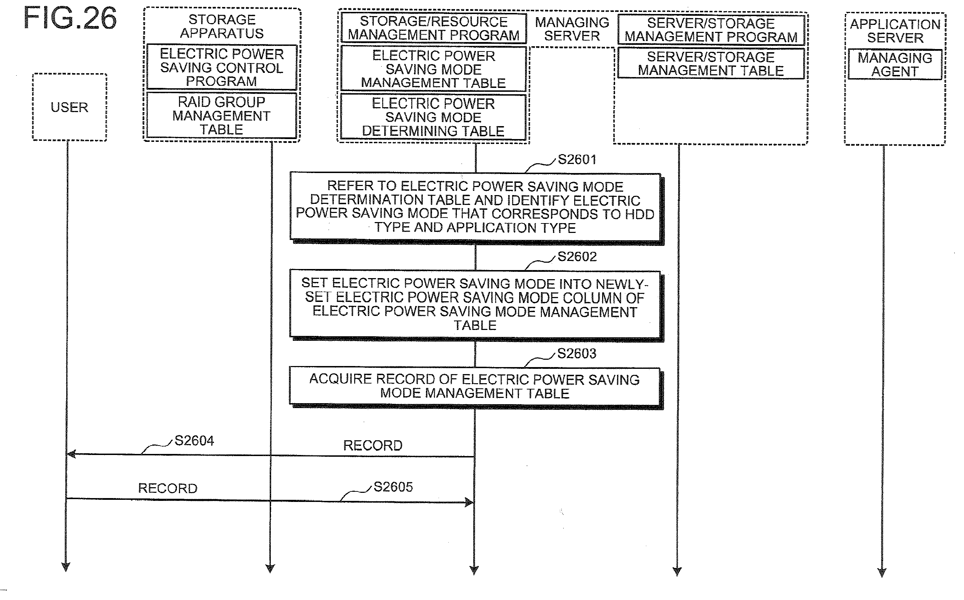

According to the server storage management program, the managing server 110 transmits to the server/storage management program, the application type set into the server/storage management table 800 (step S2506). The processing progresses to the operations depicted in FIG. 26.

As depicted in FIG. 26, by the server/storage management program, the managing server 110 receives the application type, acquires the HDD type from the HDD type column of the electric power saving mode management table 700, refers to the electric power saving mode determination table 600, and identifies the electric power saving mode that corresponds to the acquired HDD type and the received application type (step S2601).

By the server/storage management program, the managing server 110 sets the identified electric power saving mode into the newly-set electric power saving mode column of the electric power saving mode management table 700 (step S2602).

By the server/storage management program, the managing server 110 acquires the record of the electric power saving mode management table 700 (step S2603) and outputs the acquired record (step S2604).

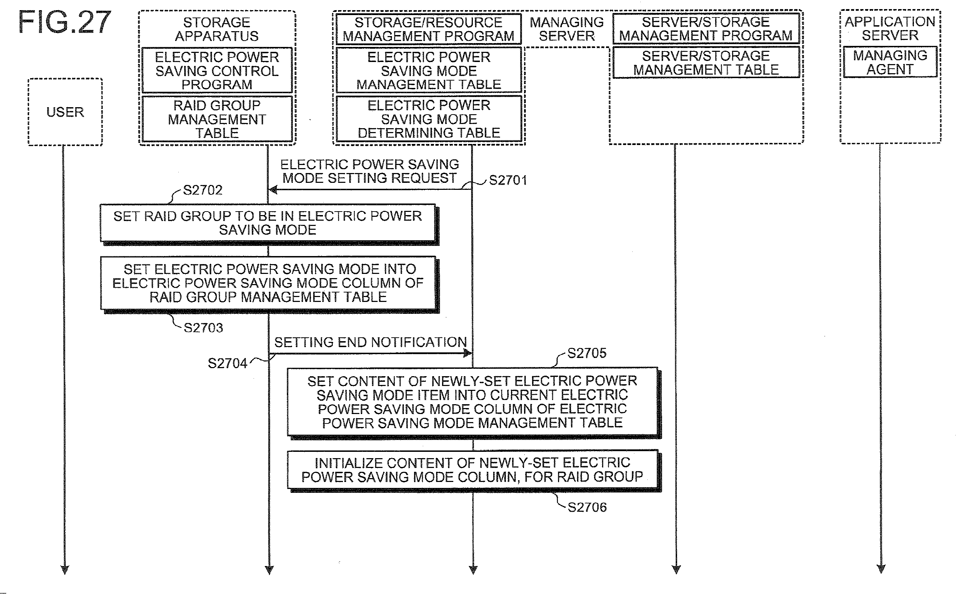

By the server/storage management program, the managing server 110 receives the record (step S2605). The processing progresses to the operations depicted in FIG. 27.

By the server/storage management program, the managing server 110 transmits to the storage apparatus 130, a setting request for the overwritten electric power saving mode (step S2701).

By the electric power saving control program, the storage apparatus 130 receives the electric power saving mode, sets the RAID group to be in the received electric power saving mode (step S2702), and sets the set electric power saving mode into the electric power saving mode column of the RAID group management table 500 (step S2703).

The storage apparatus 130 transmits a setting end notification to the managing server 110 (step S2704). By the server/storage management program, the managing server 110 sets the content of the newly-set electric power saving mode column into the current electric power saving mode column of the electric power saving mode management table 700 (step S2705).

By the server/storage management program, the managing server 110 initializes the content of the newly-set electric power saving mode column, for the RAID group (step S2706) and thus, can cause the storage apparatus 130 to set the RAID group to the electric power saving mode input from the user of the managing server 110. The storage apparatus 130 can reduce the power consumption of the RAID group by setting the RAID group to the electric power saving mode.

A second example is an example of the function of determining the electric power saving mode from the combination of the application type and the HDD type described with reference to FIG. 9 and is also an example for a case where two or more applications use the RAID group to be controlled.

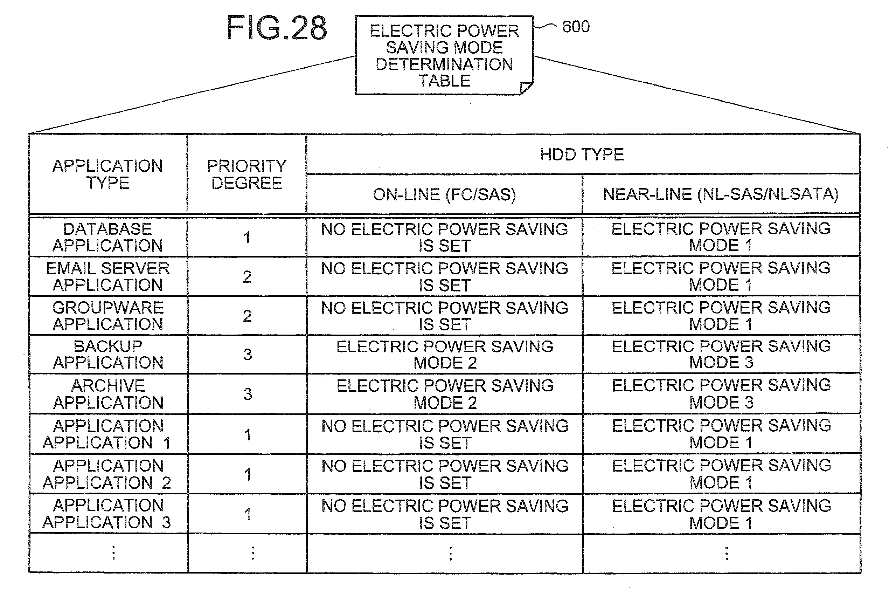

An example of a change of the contents of the electric power saving mode determination table 600 will be described with reference to FIG. 28. In the second example, a priority degree column is added to the electric power saving mode determination table 600.

FIG. 28 is an explanatory diagram of an example of the contents of the electric power saving mode determination table 600. As depicted in FIG. 28, the electric power saving mode determination table 600 includes a priority degree column, an on-line column, and a near-line column respectively correlated with an application type column and configuring records for each application type.

The contents of the application type column, the on-line column, and the near-line column are as described with reference to FIG. 6 and will not again be described. The priority degree indicates the priority degree of the application of the type indicated by the application type column.

For example, the user of the management table sets a priority degree for each of the electric power saving modes, sequentially from the electric power saving mode that does not impede the response speed. The user of the management table may set a priority degree for each of the modes, sequentially from the electric power saving mode whose electric power saving efficiency is high.

The contents of the electric power saving mode determination according to the second example are identical to that depicted in FIGs. 10 and 11. However, the operation at (17) in FIG. 11 is different.

In the second example, at (17) in FIG. 11, the managing server 110 receives plural application types from the application server 120, refers to the priority degree column of the electric power saving mode determination table 600, identifies the application type whose priority degree is the highest among the received application types, and sets the identified application type into the server/storage management table 800.

An example will be taken where a priority degree is set for each of the electric power saving modes, sequentially from the electric power saving mode that does not impede the response speed. In this case, when plural electric power saving modes are identified, the managing server 110 can preferentially identify the electric power saving mode that does not impede the response speed, even if the electric power saving mode has the lowest electric power saving efficiency.

Another example will be taken where the priority degree is set for each of the electric power saving modes, sequentially from the electric power saving mode whose electric power saving efficiency is the highest. In this case, when plural electric power saving modes are identified, the managing server 110 can preferentially identify the electric power saving mode whose electric power saving efficiency is the highest.

The contents of the electric power saving mode setting process according to the second example and executed by the managing server 110 are identical that depicted in FIG. 15 and will not again be described.

Another example will be taken where a priority degree is set for each of the electric power saving modes, sequentially from the electric power saving mode that does not impede the response speed. In this case, the managing server 110 can cause the storage apparatus 130 to preferentially set the electric power saving mode that does not impede the response speed, even if the electric power saving mode has the lowest electric power saving efficiency for the RAID group. The storage apparatus 130 can reduce the power consumption of the RAID group by setting the electric power saving mode in the RAID group.

Another example will be taken where a priority degree is set for each of the electric power saving modes, sequentially from the electric power saving mode whose electric power saving efficiency is high. In this case, the managing server 110 can cause the storage apparatus 130 to preferentially set the electric power saving mode whose electric power saving efficiency is the highest for the RAID group. The storage apparatus 130 can reduce the power consumption of the RAID group by setting the electric power saving mode in the RAID group.

The contents of the electric power saving mode determination table change according to the second example and executed by the managing server 110 are identical to that depicted in FIG. 18 and will not again be described. As described, the managing server 110 can change the contents of the electric power saving mode determination table 600.

The contents of the electric power saving mode change according to the second example and executed by the managing server 110 are identical to that depicted in FIGs. 20 to 23. However, the operation at (47) in FIG. 21 is different.

In the second example, at (47) in FIG. 21, the managing server 110 receives plural application types from the application server 120, refers to the priority degree column of the electric power saving mode determination table 600, identifies the application type whose priority degree is the highest among the received application types, and sets the identified application type into the server/storage management table 800.

Thus, the managing server 110 can cause the storage apparatus 130 to set for the RAID group, the electric power saving mode input by the user of the managing server 110. The storage apparatus 130 can reduce the power consumption of the RAID group by setting the electric power saving mode in the RAID group.

As described, the managing server 110 refers to the electric power saving mode determination table 600, identifies the electric power saving mode that corresponds to the application type of the application that uses the RAID group and thus, can cause the storage apparatus 130 to set the electric power saving mode that does not impede the response speed for the RAID group used by the application whose response speed is required to be high.

The managing server 110 can cause the storage apparatus 130 to set the electric power saving mode whose electric power saving efficiency is high for the RAID group used by the application whose response speed is not required to be high. The storage apparatus 130 can reduce the power consumption of the RAID group by setting the electric power saving mode in the RAID group.

When plural electric power saving modes are identified, the managing server 110 causes the storage apparatus 130 to preferentially set the electric power saving mode that does not impede the response speed, even if the electric power saving efficiency thereof is the lowest for the RAID group and thereby, can cause the storage apparatus 130 to set the electric power saving mode that does not impede the response speed for the RAID group used by the application whose response speed is required to be high. The storage apparatus 130 can reduce the power consumption of the RAID group by setting the electric power saving mode in the RAID group.

When plural electric power saving modes are identified, the managing server 110 causes the storage apparatus 130 to preferentially set the electric power saving mode whose electric power saving efficiency is the highest for the RAID group and thereby, can cause the storage apparatus 130 to set for the RAID group, the electric power saving mode whose electric power saving efficiency is high. The storage apparatus 130 can reduce the power consumption of the RAID group by setting the electric power saving mode in the RAID group.

The managing server 110 can acquire the application type, identify the electric power saving mode that corresponds to the application type, and cause the storage apparatus 130 to set the identified electric power saving mode for the RAID group. Therefore, the managing server 110 can reduce the work load placed on the user of the managing server 110 for the setting of the electric power saving mode, and can improve the work efficiency of the user of the managing server 110, with respect to the electric power saving management.

The managing server 110 refers to the electric power saving mode determination table 600, and identifies the electric power saving mode that corresponds to the combination of the HDD type of the RAID group and the application type of the application that uses the RAID group. Thereby, the managing server 110 can cause the storage apparatus 130 to set the electric power saving mode that does not impede the response speed for the RAID group that corresponds to the combination of the HDD type and the application type whose response speeds are required to be high.

The managing server 110 can cause the storage apparatus 130 to set the electric power saving mode whose electric power saving efficiency is high for the RAID group that corresponds to the combination of the HDD type and the application type whose response speeds are required to be high. The storage apparatus 130 can reduce the power consumption of the RAID group by setting the electric power saving mode in the RAID group.

When plural electric power saving modes are identified, the managing server 110 causes the storage apparatus 130 to preferentially set the electric power saving mode that does not impede the response speed and whose electric power saving efficiency is the lowest for the RAID group and thereby, can cause the storage apparatus 130 to set the electric power saving mode that does not impede the response speed for the RAID group that corresponds to the combination of the HDD type and the application type whose response speeds are required to be high. The storage apparatus 130 can reduce the power consumption of the RAID group by setting the electric power saving mode in the RAID group.

When plural electric power saving modes are identified, the managing server 110 causes the storage apparatus 130 to preferentially set the electric power saving mode whose electric power saving efficiency is the highest for the RAID group and thereby, can cause the storage apparatus 130 to set for the RAID group, the electric power saving mode whose electric power saving efficiency is high. The storage apparatus 130 can reduce the power consumption of the RAID group by setting the electric power saving mode in the RAID group.

The managing server 110 can acquires the application type and the HDD type, identify the electric power saving mode that corresponds to the combination of the application type and the HDD type, and cause the storage apparatus 130 to set the identified electric power saving mode for the RAID group. Therefore, the managing server 110 can reduce the work load placed on the user of the managing server 110 for the setting of the electric power saving mode and can improve the work efficiency of the management of the electric power saving by the user of the managing server 110. As described, according to the embodiment, the work load can be reduced for the management of the electric power saving of the memory apparatus and proper electric power saving of the memory apparatus can be realized.

The control method described in the present embodiment may be implemented by executing a prepared program on a computer such as a personal computer and a workstation. The program is stored on a computer-readable recording medium such as a hard disk, a flexible disk, a CD-ROM, an MO, and a DVD, read out from the computer-readable medium, and executed by the computer. The program may be distributed through a network such as the Internet.

According to an aspect of the present invention, the work load for managing electric power saving of a memory apparatus can be reduced, thereby enabling proper electric power saving of the memory apparatus to be realized.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A control apparatus comprising:
an acquiring unit (901) that acquires from a first computer that executes a software application, type information indicating a use of the software application, which uses a memory apparatus;
an identifying unit (902) that identifies an electric power saving scheme that corresponds to the acquired type information, by referring to control information that correlates type information of each software application and any one of multiple electric power saving schemes whose electric power saving efficiencies for the memory apparatus differ from each other; and
a transmitting unit (904) that transmits to a second computer capable of controlling operation of the memory apparatus according to each of the electric power saving schemes, a request to cause the memory apparatus to operate according to the identified electric power saving scheme.

2. The control apparatus according to claim 1 and further comprising
a selecting unit (903) that selects, when multiple electric power saving schemes are identified consequent to acquisition of type information of multiple software applications, an electric power saving scheme whose electric power saving efficiency is lowest among the identified electric power saving schemes, wherein
the transmitting unit (304) transmits to the second computer, a request to cause the memory apparatus to operate according to the selected electric power saving scheme.

3. The control apparatus according to claim 1 and further comprising
a selecting unit (903) that selects, when multiple electric power saving schemes are identified consequent to acquisition of type information of multiple software applications, an electric power saving scheme whose electric power saving efficiency is highest among the identified electric power saving schemes, wherein
the transmitting unit (904) transmits to the second computer, a request to cause the memory apparatus to operate according to the selected electric power saving scheme.

4. The control apparatus according to claim 1, wherein
the acquiring unit (901) acquires from the second computer, type information that indicates a degree of a permissible access frequency of the memory apparatus, and
the identifying unit (902) identifies an electric power saving scheme that corresponds to a combination of the type information of the software application and the type information concerning the memory apparatus, by referring to information correlating type information for each memory apparatus and the control information.

5. The control apparatus according to claim 4 and further comprising
a selecting unit (903) that selects, when multiple electric power saving schemes are identified consequent to acquisition of type information of multiple software applications, an electric power saving scheme whose electric power saving efficiency is lowest among the identified electric power saving schemes, wherein
the transmitting unit (904) transmits to the second computer, a request to cause the memory apparatus to operate according to the selected electric power saving scheme.

6. The control apparatus according to claim 4 and further comprising
a selecting unit (903) that selects, when multiple electric power saving schemes are identified consequent to acquisition of type information of multiple software applications, an electric power saving scheme whose electric power saving efficiency is highest among the identified electric power saving schemes, wherein
the transmitting unit (904) transmits to the second computer, a request to cause the memory apparatus to operate according to the selected electric power saving scheme.

7. A control method executed by a computer, the control method comprising:
acquiring from a first computer that executes a software application, type information indicating a use of the software application, which uses a memory apparatus;
identifying an electric power saving scheme that corresponds to the acquired type information, by referring to control information that correlates type information of each software application and any one of multiple electric power saving schemes whose electric power saving efficiencies for the memory apparatus differ from each other; and
transmitting to a second computer capable of controlling operation of the memory apparatus according to each of the electric power saving schemes, a request to cause the memory apparatus to operate according to the identified electric power saving scheme.

8. A control program that causes a computer to execute a process comprising:
acquiring from a first computer that executes a software application, type information indicating a use of the software application, which uses a memory apparatus;
identifying an electric power saving scheme that corresponds to the acquired type information, by referring to control information that correlates type information of each software application and any one of multiple electric power saving schemes whose electric power saving efficiencies for the memory apparatus differ from each other; and
transmitting to a second computer capable of controlling operation of the memory apparatus according to each of the electric power saving schemes, a request to cause the memory apparatus to operate according to the identified electric power saving scheme.
